# EUROPEAN PATENT SPECIFICATION

(11) **EP 3 949 165 B1**
(45) Date of publication and mention of the grant of the patent: **25.10.2023**
(21) Application number: 20717963.1
(22) Date of filing: 27.03.2020
(51) Int. Cl.: H04B 7/185, H04W 36/32

(54) **METHOD AND APPARATUS FOR TRACKING AREA UPDATE IN NON-TERRESTRIAL NETWORK**
VERFAHREN UND VORRICHTUNG ZUR VERFOLGUNG DER BEREICHSAKTUALISIERUNG IN EINEM NICHT TERRESTRISCHEN NETZ
PROCÉDÉ ET APPAREIL DE MISE À JOUR DE ZONE DE SUIVI DANS UN RÉSEAU NON TERRESTRE

(30) Priority: 28.03.2019 US 201962825756 P
(43) Date of publication of application: 09.02.2022
(73) Proprietor: Telefonaktiebolaget LM Ericsson (publ), 164 83 Stockholm (SE)
(72) Inventor: MÄÄTTANEN, Helka-Liina, 02360 ESPOO (FI); EULER, Sebastian, 743 35 Storvreta (SE); ISRAELSSON, Martin, 163 41 Spånga (SE); LIN, Xingqin, SAN JOSE, California 95132 (US); MASINI, Gino, 112 54 Stockholm (SE)
(74) Representative: Ericsson
(86) International application number: PCT/IB2020/052927
(87) International publication number: WO 2020/194257

(56) References cited:
- US-A1- 2014 044 058
- HUGHES: "NR-NTN: Paging in NGSO Satellite Systems", 3GPP DRAFT; R3-184403, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Gothernburg, Sweden; 20180820 - 20180824 10 August 2018 (2018-08-10), XP051527768, Retrieved from the Internet: URL:http://www.3gpp.org/ftp/tsg%5Fran/WG3% 5FIu/TSGR3%5F101/Docs/R3%2D184403%2Ezip [retrieved on 2018-08-10]

## Description

### TECHNICAL FIELD

Particular embodiments relate to the field of tracking area updates; and more specifically, to methods and apparatuses for updating tracking area in non-terrestrial network.

### BACKGROUND

There is an ongoing development of satellite communications. Several plans for satellite networks have been announced in the past few years. The target services vary from backhaul and fixed wireless to transportation, outdoor mobile and Internet of Things (IoT). Satellite networks could complement mobile networks on the ground by providing connectivity to underserved areas and multicast/broadcast services.

To benefit from the strong mobile ecosystem and economy of scale, adapting the terrestrial wireless access technologies including LTE and NR for satellite networks is drawing a significant interest. For example, 3GPP completed an initial study TR 38.811 in Release 15 on adapting NR to support non-terrestrial networks (mainly satellite networks). This initial study focused on the channel model for the non-terrestrial networks, defining deployment scenarios and identifying the key potential impacts. 3GPP is conducting a follow-up study in Release 16 on solutions of an evaluation for NR to support non-terrestrial networks.

In satellite communications, a satellite radio access network usually includes the following components: (1) a gateway that connects satellite network to core network, (2) a satellite that refers to a space-borne platform, (3) a terminal that refers to user equipment, (4) a feeder link that refers to the link between a gateway and a satellite, and (5) a service link that refers to the link between a satellite and a terminal.

The link from gateway to terminal is often called a forward link, and the link from the terminal to the gateway is often called a return link. Depending on the functionality of the satellite in the system, there are two considerable transponder options: (1) a bent pipe or a transparent transponder that a satellite forwards the received signal back to the earth with only amplification and forwards a shift from uplink frequency to downlink frequency; and (2) a regenerative transponder that a satellite includes on-board processing to demodulate and decode the received signal and to regenerate the signal before sending it back to the earth.

Depending on the orbit altitude, a satellite may be categorized as low earth orbit (LEO), medium earth orbit (MEO), or geostationary (GEO) satellite. LEO applies to typical heights ranging from 250 to 1,500 km, with orbital periods ranging from 90 to 130 minutes. MEO applies to typical heights ranging from 5,000 to 25,000 km, with orbital periods ranging from 2 to 14 hours. GEO applies to a height of about 35,786 km, with an orbital period of 24 hours.

A communication satellite typically generates several beams over a given area. The footprint of a beam is usually in an elliptic shape, which has been traditionally considered as a cell. The footprint of a beam is also often referred to as a spotbeam. The footprint of the beam may move over the earth surface with the satellite movement or may be earth-fixed with some beam pointing mechanism used by the satellite to compensate for its motion. A size of the spotbeam depends on the system design, which may range from tens of kilometers to a few thousands of kilometers.

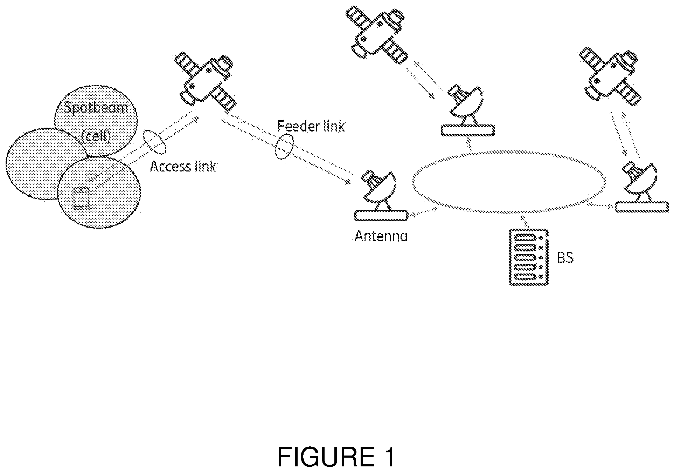

FIGURE 1 illustrates an example architecture of a satellite network with bent pipe transponders. In 3GPP RAN#80, a new system information (SI) "Solutions for NR to support Non-Terrestrial Network" was agreed, see RP-181370 by 3GPP.org. It is a continuation of a preceding SI "NR to support Non-Terrestrial Networks," see RP-171450 by 3GPP.org, where the objective was to study the channel model for the non-terrestrial networks, to define deployment scenarios and parameters, and to identify the key potential impacts on NR. The results are reflected in technical report (TR) 38.811 by 3GPP.org.

The objectives of the current SI are used to evaluate solutions for the identified key impacts from the preceding SI and to study impact on RAN protocols/architecture. The objectives comprise (1) physical layer; and (2) layer 2 and above, and RAN architecture.

| | |
|---|---|
| Physical layer | |
| Consolidation of potential impacts as initially identified in TR 38.811 and identification of related solutions if needed: | |
| • Physical layer control procedures (e.g. CSI feedback, power control) | |
| • Uplink Timing advance/RACH procedure including PRACH sequence/format/message | |
| • Making retransmission mechanisms at the physical layer more delay-tolerant as | |
| appropriate. This may also include capability to deactivate the HARQ mechanisms. | |
| Performance assessment of NR in selected deployment scenarios (LEO based satellite access, GEO based satellite access) through link level (Radio link) and system level (cell) simulations | |
| Layer 2 and above, and RAN architecture | |
| • Study the following aspects and identify related solutions if needed: Propagation delay:Identify timing requirements and solutions on layer 2 aspects, MAC, RLC, RRC, to support non-terrestrial network propagation delays considering FDD and TDD duplexing mode. This includes radio link management. [RAN2] | |
| • Handover: Study and identify mobility requirements and necessary measurements that may be needed for handovers between some non-terrestrial space-borne vehicles (such as Non-Geo stationary satellites) that move at much higher speed but over predictable paths. [RAN2,RAN1] | |
| • Architecture: Identify needs for the 5G's Radio Access Network architecture to supportnon-terrestrial networks (e.g. handling of network identities). [RAN3] | |
| | o Paging: procedure adaptations in case of moving satellite foot prints or cells. |

For scenario D in SI, the scenario D is a LEO with regenerative payload, and both earth-fixed and earth-moving beams have been listed. Therefore, considering the fixed and the non-fixed beams, there should be an additional scenario D. A complete list of five scenarios in TR 38.821 by 3GPP.org should comprise: (1) Scenario A - GEO, transparent satellite, Earth-fixed beams; (2) Scenario B - GEO, regenerative satellite, Earth fixed beams; (3) Scenario C - LEO, transparent satellite, Earth-moving beams; (4) Scenario D1 - LEO, regenerative satellite, Earth-fixed beams; and (5) Scenario D2 - LEO, regenerative satellite, Earth-moving beams.

When NR or LTE is applied to provide the connectivity via satellites, it means that the ground station is a RAN node. In the case where the satellite is transparent, all RAN functionalities are on the ground, which means the satellite gateway has a whole eNB/gNB functionality. For the regenerative satellite payload, part or all of the eNB/gNB processing may be on the satellite.

There are also mobility issues for User Equipment (UEs) served by non-GEO satellites. Non-GEO satellites move rapidly with respect to any given UE location. As an example, on a two-hour orbit, a LEO satellite is in view of a stationary UE from horizon to horizon for about 20 minutes. Since each LEO satellite may have many beams, the time during which a UE stays within a beam is typically only a few minutes. The fast pace of a satellite movement creates problems for mobile-terminated reachability (i.e. paging), mobile originated reachability (i.e., random access) as well as idle and connected mode mobility (i.e., handovers) for both stationary UE and moving UE.

Unlike terrestrial framework where a cell on the ground is tied to radio communication with a RAN, in non-GEO satellite access network, the satellite beams may be moving. There is no fixed correspondence between cells on the ground and satellite beams. The same geographical region on the ground can be covered by different satellites and different beams over time.

Basically, when one LEO satellite's beam moves away from the geographical area, another LEO satellite's beam (that may be generated by the same LEO satellite or by a neighboring LEO satellite) should come in and cover the same geographical area.

Furthermore, the ground serving a RAN node changes when the satellite gateway changes. This situation is not present in normal terrestrial networks.

There are several network identities as described in TR 38.300 by 3GPP.org, which comprises: (1) NR Cell Global Identifier (NCGI) which is used to identify NR cells globally, wherein the NCGI is constructed from the PLMN identity the cell belongs to and the NR Cell Identity (NCI) of the cell; (2) gNB Identifier (gNB ID) which is used to identify gNBs within a PLMN, wherein the gNB ID is contained within the NCI of its cells; (3) Global gNB ID which is used to identify gNBs globally, wherein the Global gNB ID is constructed from the PLMN identity and the gNB belongs to and the gNB ID, and furthermore, the MCC and MNC are the same as included in the NCGI; and (4) Tracking Area identity (TAI) which is used to identify tracking areas. The TAI is constructed from the PLMN identity the tracking area belongs to and the tracking area code (TAC) of the tracking area. For example, TAI and NR cell identities are given in system information block type 1 (SIB1) for UE in connected and idle mode to know which tracking area they are currently connected to, or should be paged from.

The problems using NR terminology are described herein, but it should be understood that the same problems apply to LTE as well where applicable.

There currently exist certain challenges. For a non-GEO satellite communications system where beams move with satellites, the cell's coverage area moves on the ground. Under the existing UE tracking and paging procedures in 5G NR, by 3GPP.org, designed for terrestrial networks, the tracking area sweeps over the ground as well. As a result, a stationary UE would have to keep performing location registration in radio resource control (RRC) protocol RRC_IDLE state. For each location area registration, the UE needs to initiate connection with the network. For Release 15 of the 5G NR standard, this requires a four-steps random access procedure followed by some RRC message exchange over the service link. This can become a non-acceptable overhead if all IDLE_mode UEs in the tracking area need to perform tracking area update (TAU) every few minutes as the LEO satellite passes by. If the geographical area of the TA is large, this issue may become slightly less severe. However, a size of TA and a paging capacity form a trade off as the UE may need to be paged via all cells belonging to the TA, and thus, the paging capacity may become an issue when network-initiated calls arrive.

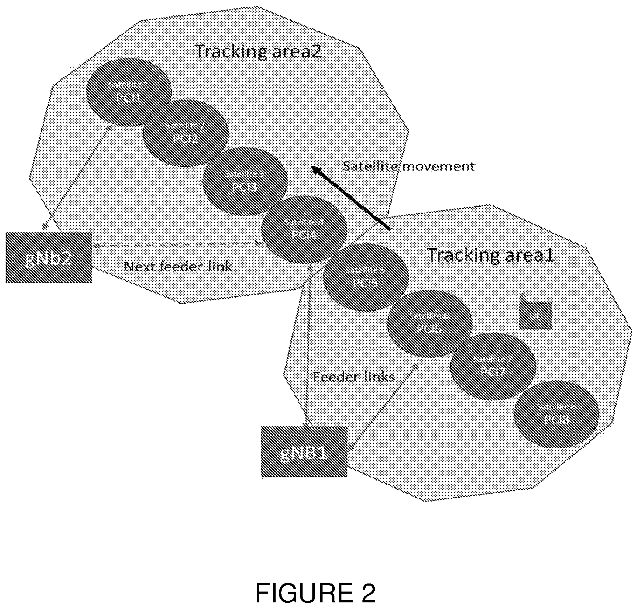

In order to not to have TAU performed periodically by the UE, the tracking area may be designed to be fixed on ground. For a LEO non-terrestrial network (NTN), this implies that while the cells sweep on the ground, the tracking area broadcast is changed when the cells arrive the area of a next earth fixed tracking area location. This is further depicted in FIGURE 2 for a bent-pipe LEO NTN. As the tracking area and cell mapping is changing, this implies that a core network (CN) signaling for new mappings is needed.

FIGURE 2 illustrates a feeder link switch for a regenerative LEO with gNB as payload. For the regenerative architecture option, the gNB is considered to be a part of the satellite payload. Therefore, it is natural to assume that both cellID and physical cell identifier (PCI) would travel along with the satellite. The TAC, or a list of TACs, broadcasted by the gNB needs to be updated as the gNB enters to the area of next TA. However, how to update the tracking area in an efficient manner from the perspectives of the UE and the network is questionable.

A Hughes 3GPP submission entitled "NR-NTN: Paging in NGSO Satellite Systems" (R3-184403, Sweden, August 2018) discusses issues associated with paging in a geographical area when satellite beams move in Non-Geosynchronous Satellite Orbit (NGSO) satellite systems.

### SUMMARY

To address the foregoing problems with existing solutions, disclosed are a method and a network node to update a tracking area in a non-terrestrial network without excessive signaling. The present disclosure implements a solution to preconfigure network nodes in the non-terrestrial network with a predetermined mapping of tracking area corresponding to a cell identity of a target network node within a specific period of time, so that a signaling of switching tracking area can be avoided. Furthermore, the present disclosure also provides a solution to generate a list of target tracking areas based on a movement of the satellite, such that UEs in the non-terrestrial network can utilize the latest updated tracking area in the list without additional tracking area updates.

Several embodiments are elaborated in this disclosure. According to one embodiment of a method for updating a tracking area in a non-terrestrial network, the method comprises determining, at a network node, that a current tracking area in a non-terrestrial network for the network node is expiring. The method further comprises determining, at the network node, at least one target tracking area in the non-terrestrial network based on a preconfigured mapping. The preconfigured mapping comprises at least one target tracking area code corresponding to a cell identity of a target network node within a period of time. The method yet comprises broadcasting, to at least one UE in the at least one target tracking area, system information comprising information of the at least one target tracking area.

In one embodiment, the network node is a gNB implemented in a satellite and communicates with a ground node via a feeder link.

In one embodiment, the network node is a gNB implemented in a ground node and communicates with a satellite via a feeder link.

In one embodiment, the target network node is preconfigured based on the preconfigured mapping.

In one embodiment, the preconfigured mapping is determined based on ephemeris data of a satellite.

In one embodiment, the method further comprises determining an additional mapping of an additional target network node and an additional period of time for an additional tracking area when the feeder link is changed, and signaling information of the additional mapping to the additional target network node for establishing a next feeder link between the network node and the additional target network node.

According to yet another embodiment of a method for updating a tracking area in a non-terrestrial network, the method comprises receiving, at a UE in a non-terrestrial network, system information comprising information of at least one target tracking area via a broadcast from a network node. The information of the at least one target tracking area comprises at least one target tracking area code corresponding to a cell identity of a target network node within a period of time. The method further comprises utilizing, at the UE in the non-terrestrial network, information of a first target tracking area of the at least one target tracking area provided in the system information based on a location of the UE.

In one embodiment, the method further comprises updating, at the UE in the non-terrestrial network, UE information based on the system information to utilize the information of the first target tracking area.

In one embodiment, the information of the at least one target tracking area is determined based on ephemeris data of a satellite.

In one embodiment, the first target tracking area of the at least one target tracking area is the latest target tracking area of the at least one target tracking area updated by the network node.

According to an embodiment of a network node for updating a tracking area in a non-terrestrial network, the network node comprises at least one processing circuitry and at least one storage that stores processor-executable instructions that, when executed by the processing circuitry, causes a network node to determine that a current tracking area in a non-terrestrial network for the network node is expiring. The circuitry also causes the network node to determine at least one target tracking area in the non-terrestrial network based on a preconfigured mapping. The preconfigured mapping comprises at least one target tracking area code corresponding to a cell identity of a target network node within a period of time. The circuitry also causes the network node to broadcast, to at least one UE in the at least one target tracking area, system information comprising information of the at least one target tracking area.

According to an embodiment of a UE for updating a tracking area in a non-terrestrial network, the network node comprises at least one processing circuitry and at least one storage that stores processor-executable instructions that, when executed by the processing circuitry, causes a UE to receive system information comprising information of at least one target tracking area via a broadcast from a network node. The information of the at least one target tracking area comprises at least one target tracking area code corresponding to a cell identity of a target network node within a period of time. The circuitry also causes the UE to utilize information of a first target tracking area of the at least one target tracking area provided in the system information based on a location of the UE.

Certain aspects of the present disclosure and their embodiments may provide solutions to these or other challenges. There are, proposed herein, various embodiments which address one or more of the issues disclosed herein.

Certain embodiments may provide one or more of the following technical advantages. The methods disclosed in the present disclosure may provide an improved, efficient solution to avoid excessive tracking area updates by preconfiguring a network node in the non-terrestrial network or determining a list of target tracking areas for the UEs in the non-terrestrial network. With the preconfigured network nodes and/or the determined target tracking areas, the signaling of switching tracking areas can be reduced, and therefore, the performance of the network can be improved.

Various other features and advantages will become obvious to one of ordinary skill in the art in light of the following detailed description and drawings. Certain embodiments may have none, some, or all of the recited advantages.

Certain embodiments may provide one or more of the following technical advantages. The methods disclosed in the present disclosure may provide an improved, efficient solution to avoid excessive tracking area updates by preconfiguring a network node in the non-terrestrial network or determining a list of target tracking areas for the UEs in the non-terrestrial network. With the preconfigured network nodes and/or the determined target tracking areas, the signaling of switching tracking areas can be reduced, and therefore, the performance of the network can be improved.

Various other features and advantages will become obvious to one of ordinary skill in the art in light of the following detailed description and drawings. Certain embodiments may have none, some, or all of the recited advantages.

### BRIEF DESCRIPTION OF THE DRAWINGS

The accompanying drawing figures incorporated in and forming a part of this specification illustrate several aspects of the disclosure, and together with the description serve to explain the principles of the disclosure.
FIGURE 1 illustrates an example diagram of an architecture of a satellite network with bent pipe transponders;
FIGURE 2 illustrates an example diagram of a feeder link in a regenerative low earth orbits (LEO) with a gNB;
FIGURE 3 illustrates an example diagram of example tracking areas for the regenerative LEO in a non-terrestrial network, according to certain embodiments;
FIGURE 4 illustrates an example wireless network, according to certain embodiments;
FIGURE 5 illustrates an example user equipment, according to certain embodiments;
FIGURE 6 illustrates an example virtualization environment, according to certain embodiments;
FIGURE 7 illustrates an example telecommunication network connected via an intermediate network to a host computer, according to certain embodiments;
FIGURE 8 illustrates an example host computer communicating via a base station with a user equipment over a partially wireless connection, according to certain embodiments;
FIGURE 9 illustrates a flow diagram of an example method performed at a UE, in accordance with certain embodiments;
FIGURE 10 illustrates a flow diagram of an example method performed at a base station, in accordance with certain embodiments;
FIGURE 11 illustrates a block schematic of an example apparatus, in accordance with certain embodiments;
FIGURE 12 illustrates a flow diagram of an example method performed at a network node, in accordance with certain embodiments;
FIGURE 13 illustrates a flow diagram of another example method performed at a network node, in accordance with certain embodiments;
FIGURE 14 illustrates a flow diagram of an example method performed at a network node, in accordance with certain embodiments;
FIGURE 15 illustrates a block schematic of an example network node, in accordance with certain embodiments; and
FIGURE 16 illustrates a block schematic of an example user equipment, in accordance with certain embodiments.

### DETAILED DESCRIPTION

Current satellite communications require tracking area updates (TAUs) performed by user equipments (UEs) over a satellite link periodically or when the UE initiates a connection. The excessive signaling of updating the tracking area via a link with satellite might compromise the performance of the network. Particular embodiments of the present disclosure provide solutions handling different network identities and the tracking area management for non-GEO circumstances. In order to avoid excessive TAUs performed by the UE, the TA is assumed to be fixed on a geographical location which indicates that cells need to update the TA in a broadcast, and the target network nodes for broadcasting are preconfigured based on the fixed TA.

Furthermore, in order to eliminate core network (CN) signaling, from a network perspective, every possible TA-to-CellID mappings are preconfigured when the satellite with the cellID is going around its orbit. As the satellite/network element movement is predictable and follows the same route on each orbit, it is possible to define absolute times when each of the TA-to-CellID mapping is valid. When the network is configured with this, there is no need to signal a switch of tracking area based on the TA-to-CellID mapping. In addition, UEs may perform TAU only when the UE is moving corresponding to the operations of terrestrial networks.

Particular embodiments of the present disclosure provide methods performed by wireless devices and network nodes for updating a target tracking area of a non-terrestrial network based on a preconfigured mapping. Furthermore, particular embodiments of the present disclose also provide a method performed by wireless devices and network nodes for updating a target tracking area of a non-terrestrial network by determining a list of target tracking area for the UEs based on an orbit of the satellite. Therefore, via the methods disclosed in the present disclosure, an elimination of excessive UE TAUs over the satellite link can be offered.

In the present disclosure, a network node may be referred to as a base station. The base station is a general term and can correspond to any type of radio network node or any network node, which communicates with a UE and/or with another network node. Examples of network nodes are NodeB, base station (BS), multi-standard radio (MSR) radio node, such as MSR BS, eNB, gNB. MeNB, SeNB, network controller, radio network controller (RNC), core network node (AMF, MME, MSC etc.), base station controller (BSC), road side unit (RSU), relay, donor node controlling relay, base transceiver station (BTS), access point (AP), transmission points, transmission nodes, RRU, RRH, nodes in distributed antenna system (DAS), O&M, OSS, SON, positioning node (e.g. E-SMLC) etc.

The term radio access technology, or RAT, may refer to any RAT e.g. UTRA, E-UTRA, narrow band internet of things (NB-IoT), WiFi, Bluetooth, next generation RAT (NR), 4G, 5G, etc. Any of the first and the second nodes may be capable of supporting a single or multiple RATs.

The term reference signal used herein can be any physical signal or physical channel. Examples of downlink reference signals are PSS, SSS, CRS, PRS, CSI-RS, DMRS, NRS, NPSS, NSSS, SS, MBSFN RS etc. Examples of uplink reference signals are SRS, DMRS etc.

The present disclosure presents the non-limiting example of NG-RAN and 5GC, where gNB is taken as an example of BS and Access and Mobility Management Function (AMF) is an example of the MM node. This is a non-limiting example. The messages and the IE names are examples and can be implemented differently.

The solutions using NR terminology are described herein, but it should be understood that the same solutions apply to LTE as well where applicable.

A particular embodiment in the present disclosure provides a method for a hard switch of tracking area in system information. At a predefined time, the cell, e.g., which is covered by the satellite, switches to a new tracking area. The hard switch of the tracking area considers a tracking area served by a moving cell with a NR cell identity (NCI) *m* during the time interval [t*ᵢ*, t_{*i*+*1*}]. During this time interval, the moving cell with NCI *m* broadcasts the corresponding tracking area code which is denoted by TAC*ᵢ^{[m]}*. Table 1 below gives one example illustration of the TAC-to-NCI mapping.

**Table 1. Tracking area identifier (TAI) preconfiguration**

| | [*t₀, t₁*] | [*t₁, t₂*] | ... | [*tᵢ, t*_{*i*+*1*}] | ... |
|---|---|---|---|---|---|
| NCI *0* | *TAC₀^{[0]}* | *TAC₁^{[0]}* | ... | *TACᵢ^{[0]}* | ... |
| ... | | | | | |
| NCI *m* | *TAC₀^{[m]}* | *TAC₁^{[m]}* | ... | *TACᵢ^{[m]}* | ... |
| ... | | | | | |

In particular embodiments, the hard switch of tracking area based on a preconfigured mapping may be possible without requiring 5G NR standard changes.

Another embodiment in the present disclosure provides a method for a soft switch of tracking area in system information. In the second embodiment, the method provides a list of target tracking areas for UEs in the non-terrestrial network for switching tracking area. While transiting, e.g., the movement of the satellite, the cell adds a new TAC in its system information in addition to an old TAC, and removes the old TAC a bit later. If there is a chain of TAs, the list of target tracking areas would add one new target tracking area and remove one old target tracking area, while the cell sweeps the ground. A UE may know which target tracking area is the newest addition based on the order of the target tracking areas in the list. In particular embodiments, a flag may be added to a specific target tracking area, such that the UE may recognize which target tracking area is the newest.

From the perspective of UE, the UE would consider the newest TAC *X* when deciding whether a TAU is needed. TAU *X* may be broadcasted in system information or given to the UE in NAS signaling. For example, when the list of target tracking areas, which includes tracking area codes corresponding to the target tracking areas, is given/updated, information of the newest TAU would be broadcasted in system information or in NAS signaling.

Furthermore, the TAC, or a list of TACs, broadcasted by a gNB needs to be updated as the gNB enters to the area of the next TA.

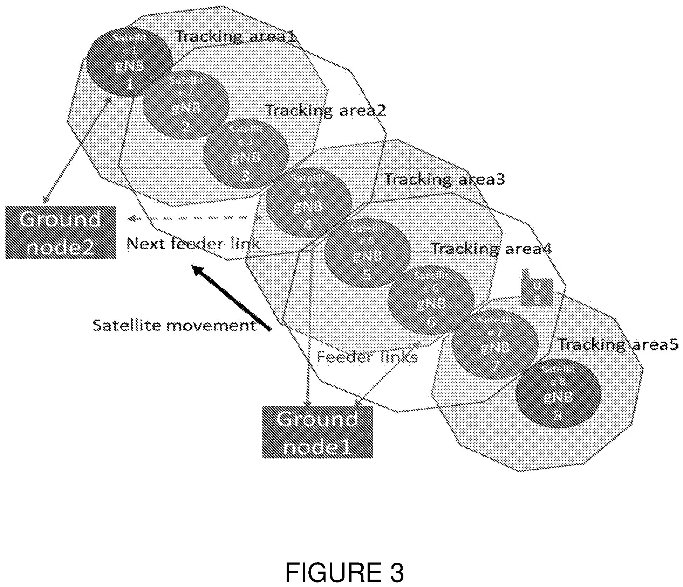

FIGURE 3 is a block diagram of an example regenerative LEO with gNB as payload, in accordance with certain embodiments. A list of TACs is similarly updated via a broadcast for a transparent LEO in a same/similar manner as the regenerative LEO disclosed in FIGURE 3.

From the perspective of a network node, a TAC-to-NCI mapping can be preconfigured as the ephemeris data of the satellite. Each gNB maintains a list of TAs, and each of the TA is mapped to a pool of NCIs.

Furthermore, a preconfigured mapping disclosed in the previously described embodiments may not be complete to cover all NCIs in the NTN system as that requires an extensive mapping. The preconfigured mappings could cover e.g. only those NCIs valid during a certain period of time (e.g. the next few hours), or those NCIs remain valid while the feeder link stays the same. After the relevant time or when the feeder link switches, a new mapping is ready to be signaled. In particular embodiments, the signaling of the new mapping may not be tied to a switch of the feeder link, e.g., which is about to be changed or established. The signaling of the new mapping may be updated by a network signaling when feasible.

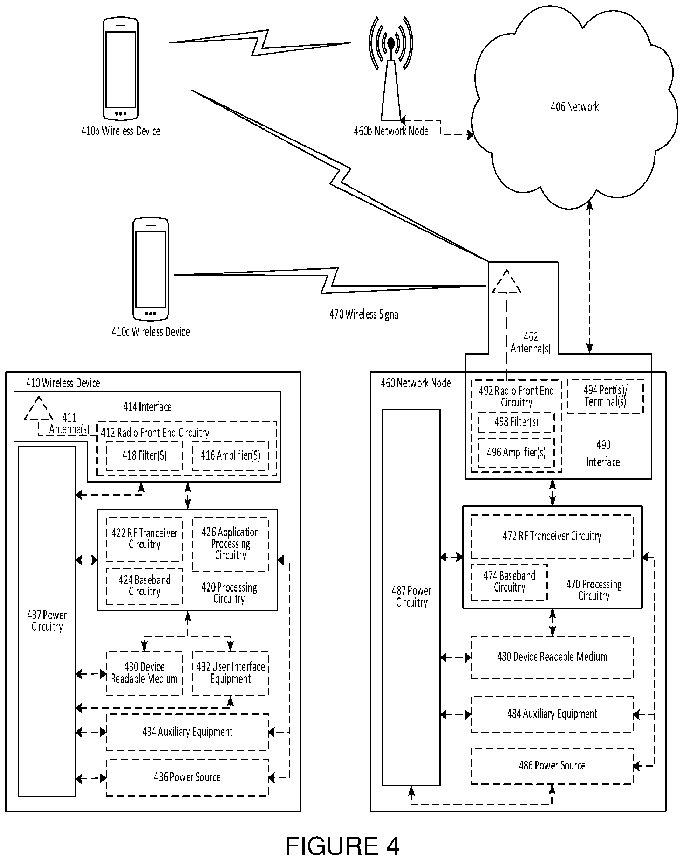

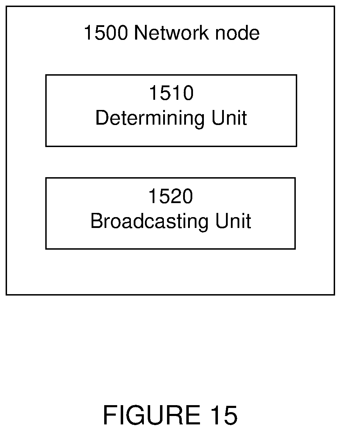

FIGURE 4 is an example wireless network, in accordance with certain embodiments. Although the subject matter described herein may be implemented in any appropriate type of system using any suitable components, the embodiments disclosed herein are described in relation to a wireless network, such as the example wireless network illustrated in FIGURE 4. For simplicity, the wireless network of FIGURE 4 only depicts network 406, network nodes 460 and 460b, and wireless devices (WDs) 410, 410b, and 410c. In practice, a wireless network may further include any additional elements suitable to support communication between wireless devices or between a wireless device and another communication device, such as a landline telephone, a service provider, or any other network node or end device. Of the illustrated components, network node 460 and wireless device (WD) 410 are depicted with additional detail. In some embodiments, the network node 460 may be a base station, such as an eNB. In the present disclosure, the term eNB may be used to refer to both an eNB and a ng-eNB unless there is a specific need to distinguish between the two. In certain embodiments, the network node 460 may be a network node, which is further illustrated in FIGURE 15. In certain embodiments, the network node 460 may be the gNB described in FIGURE 3. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 406 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 460 and WD 410 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 4, network node 460 includes processing circuitry 470, device readable medium 480, interface 490, auxiliary equipment 488, power source 486, power circuitry 487, and antenna 462. Although network node 460 illustrated in the example wireless network of FIGURE 4 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 460 are depicted as single boxes located within a larger box, or nested within multiple boxes, in practice, a network node may comprise multiple different physical components that make up a single illustrated component (e.g., device readable medium 480 may comprise multiple separate hard drives as well as multiple RAM modules).

Similarly, network node 460 may be composed of multiple physically separate components (e.g., a NodeB component and a RNC component, or a BTS component and a BSC component, etc.), which may each have their own respective components. In certain scenarios in which network node 460 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, network node 460 may be configured to support multiple radio access technologies (RATs). In such embodiments, some components may be duplicated (e.g., separate device readable medium 480 for the different RATs) and some components may be reused (e.g., the same antenna 462 may be shared by the RATs). Network node 460 may also include multiple sets of the various illustrated components for different wireless technologies integrated into network node 460, such as, for example, GSM, WCDMA, LTE, NR, WiFi, or Bluetooth wireless technologies. These wireless technologies may be integrated into the same or different chip or set of chips and other components within network node 460.

Processing circuitry 470 is configured to perform any determining, calculating, or similar operations (e.g., certain obtaining operations) described herein as being provided by a network node. These operations performed by processing circuitry 470 may include processing information obtained by processing circuitry 470 by, for example, converting the obtained information into other information, comparing the obtained information or converted information to information stored in the network node, and/or performing one or more operations based on the obtained information or converted information, and as a result of said processing making a determination.

Processing circuitry 470 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 460 components, such as device readable medium 480, network node 460 functionality. For example, processing circuitry 470 may execute instructions stored in device readable medium 480 or in memory within processing circuitry 470. Such functionality may include providing any of the various wireless features, functions, or benefits discussed herein. In some embodiments, processing circuitry 470 may include a system on a chip (SOC).

In some embodiments, processing circuitry 470 may include one or more of radio frequency (RF) transceiver circuitry 472 and baseband processing circuitry 474. In some embodiments, radio frequency (RF) transceiver circuitry 472 and baseband processing circuitry 474 may be on separate chips (or sets of chips), boards, or units, such as radio units and digital units. In alternative embodiments, part or all of RF transceiver circuitry 472 and baseband processing circuitry 474 may be on the same chip or set of chips, boards, or units

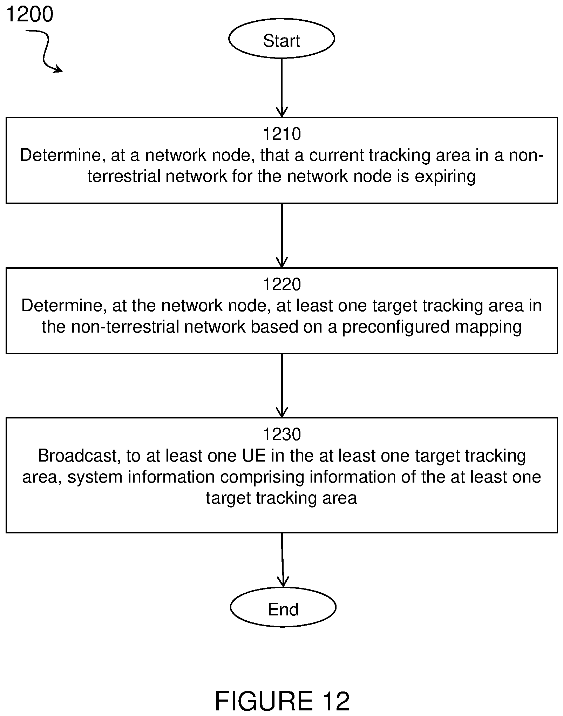

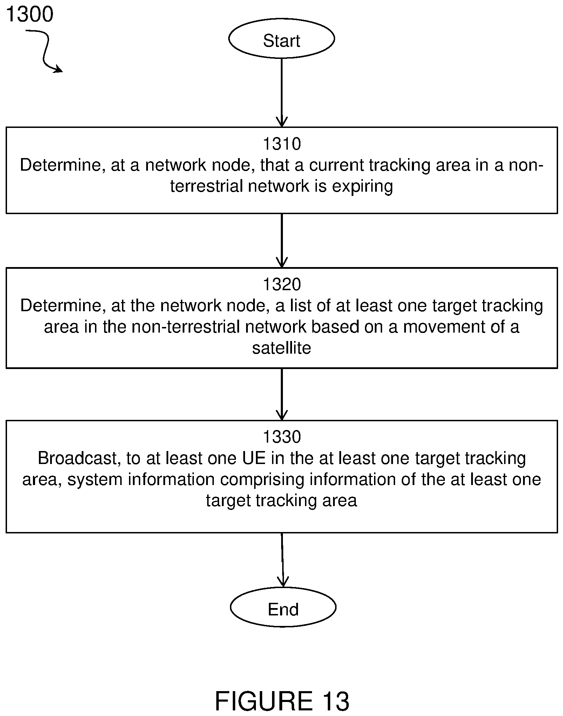

In certain embodiments, some or all of the functionality described herein as being provided by a network node, base station, eNB or other such network device may be performed by processing circuitry 470 executing instructions stored on device readable medium 480 or memory within processing circuitry 470. In alternative embodiments, some or all of the functionality may be provided by processing circuitry 470 without executing instructions stored on a separate or discrete device readable medium, such as in a hard-wired manner. In any of those embodiments, whether executing instructions stored on a device readable storage medium or not, processing circuitry 470 can be configured to perform the described functionality. In particular embodiments, the processing circuitry 470 of the network node 460 may perform methods which is further illustrated in FIGURES 12 and 13. The benefits provided by such functionality are not limited to processing circuitry 470 alone or to other components of network node 460 but are enjoyed by network node 460 as a whole, and/or by end users and the wireless network generally.

Device readable medium 480 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 470. Device readable medium 480 may store any suitable instructions, data or information, including a computer program, software, an application including one or more of logic, rules, code, tables, etc. and/or other instructions capable of being executed by processing circuitry 470 and, utilized by network node 460. Device readable medium 480 may be used to store any calculations made by processing circuitry 470 and/or any data received via interface 490. In some embodiments, processing circuitry 470 and device readable medium 480 may be considered to be integrated.

Interface 490 is used in the wired or wireless communication of signaling and/or data between network node 460, network 406, and/or WDs 410. As illustrated, interface 490 comprises port(s)/terminal(s) 494 to send and receive data, for example to and from network 406 over a wired connection. Interface 490 also includes radio front end circuitry 492 that may be coupled to, or in certain embodiments a part of, antenna 462. Radio front end circuitry 492 comprises filters 498 and amplifiers 496. Radio front end circuitry 492 may be connected to antenna 462 and processing circuitry 470. Radio front end circuitry may be configured to condition signals communicated between antenna 462 and processing circuitry 470. Radio front end circuitry 492 may receive digital data that is to be sent out to other network nodes or WDs via a wireless connection. Radio front end circuitry 492 may convert the digital data into a radio signal having the appropriate channel and bandwidth parameters using a combination of filters 498 and/or amplifiers 496. The radio signal may then be transmitted via antenna 462. Similarly, when receiving data, antenna 462 may collect radio signals which are then converted into digital data by radio front end circuitry 492. The digital data may be passed to processing circuitry 470. In other embodiments, the interface may comprise different components and/or different combinations of components.

In certain alternative embodiments, network node 460 may not include separate radio front end circuitry 492, instead, processing circuitry 470 may comprise radio front end circuitry and may be connected to antenna 462 without separate radio front end circuitry 492. Similarly, in some embodiments, all or some of RF transceiver circuitry 472 may be considered a part of interface 490. In still other embodiments, interface 490 may include one or more ports or terminals 494, radio front end circuitry 492, and RF transceiver circuitry 472, as part of a radio unit (not shown), and interface 490 may communicate with baseband processing circuitry 474, which is part of a digital unit (not shown).

Antenna 462 may include one or more antennas, or antenna arrays, configured to send and/or receive wireless signals. Antenna 462 may be coupled to radio front end circuitry 490 and may be any type of antenna capable of transmitting and receiving data and/or signals wirelessly. In some embodiments, antenna 462 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 462 may be separate from network node 460 and may be connectable to network node 460 through an interface or port.

Antenna 462, interface 490, and/or processing circuitry 470 may be configured to perform any receiving operations and/or certain obtaining operations described herein as being performed by a network node. Any information, data and/or signals may be received from a wireless device, another network node and/or any other network equipment. Similarly, antenna 462, interface 490, and/or processing circuitry 470 may be configured to perform any transmitting operations described herein as being performed by a network node. Any information, data and/or signals may be transmitted to a wireless device, another network node and/or any other network equipment.

Power circuitry 487 may comprise, or be coupled to, power management circuitry and is configured to supply the components of network node 460 with power for performing the functionality described herein. Power circuitry 487 may receive power from power source 486. Power source 486 and/or power circuitry 487 may be configured to provide power to the various components of network node 460 in a form suitable for the respective components (e.g., at a voltage and current level needed for each respective component). Power source 486 may either be included in, or external to, power circuitry 487 and/or network node 460. For example, network node 460 may be connectable to an external power source (e.g., an electricity outlet) via an input circuitry or interface such as an electrical cable, whereby the external power source supplies power to power circuitry 487. As a further example, power source 486 may comprise a source of power in the form of a battery or battery pack which is connected to, or integrated in, power circuitry 487. The battery may provide backup power should the external power source fail. Other types of power sources, such as photovoltaic devices, may also be used.

Alternative embodiments of network node 460 may include additional components beyond those shown in FIGURE 4 that may be responsible for providing certain aspects of the network node's functionality, including any of the functionality described herein and/or any functionality necessary to support the subject matter described herein. For example, network node 460 may include user interface equipment to allow input of information into network node 460 and to allow output of information from network node 460. This may allow a user to perform diagnostic, maintenance, repair, and other administrative functions for network node 460.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 410 includes antenna 411, interface 414, processing circuitry 420, device readable medium 430, user interface equipment 432, auxiliary equipment 434, power source 436 and power circuitry 437. WD 410 may include multiple sets of one or more of the illustrated components for different wireless technologies supported by WD 410, such as, for example, GSM, WCDMA, LTE, NR, WiFi, WiMAX, or Bluetooth wireless technologies, just to mention a few. These wireless technologies may be integrated into the same or different chips or set of chips as other components within WD 410.

Antenna 411 may include one or more antennas or antenna arrays, configured to send and/or receive wireless signals, and is connected to interface 414. In certain alternative embodiments, antenna 411 may be separate from WD 410 and be connectable to WD 410 through an interface or port. Antenna 411, interface 414, and/or processing circuitry 420 may be configured to perform any receiving or transmitting operations described herein as being performed by a WD. Any information, data and/or signals may be received from a network node and/or another WD. In some embodiments, radio front end circuitry and/or antenna 411 may be considered an interface.

As illustrated, interface 414 comprises radio front end circuitry 412 and antenna 411. Radio front end circuitry 412 comprise one or more filters 418 and amplifiers 416. Radio front end circuitry 414 is connected to antenna 411 and processing circuitry 420 and is configured to condition signals communicated between antenna 411 and processing circuitry 420. Radio front end circuitry 412 may be coupled to or a part of antenna 411. In some embodiments, WD 410 may not include separate radio front end circuitry 412; rather, processing circuitry 420 may comprise radio front end circuitry and may be connected to antenna 411. Similarly, in some embodiments, some or all of RF transceiver circuitry 422 may be considered a part of interface 414. Radio front end circuitry 412 may receive digital data that is to be sent out to other network nodes or WDs via a wireless connection. Radio front end circuitry 412 may convert the digital data into a radio signal having the appropriate channel and bandwidth parameters using a combination of filters 418 and/or amplifiers 416. The radio signal may then be transmitted via antenna 411. Similarly, when receiving data, antenna 411 may collect radio signals which are then converted into digital data by radio front end circuitry 412. The digital data may be passed to processing circuitry 420. In other embodiments, the interface may comprise different components and/or different combinations of components.

Processing circuitry 420 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 410 components, such as device readable medium 430, WD 410 functionality. Such functionality may include providing any of the various wireless features or benefits discussed herein. For example, processing circuitry 420 may execute instructions stored in device readable medium 430 or in memory within processing circuitry 420 to provide the functionality disclosed herein. In particular embodiments, the processing circuitry 420 of the WD 410 may execute instructions to perform measurements for certain cells in the network 406, which is further illustrated below.

As illustrated, processing circuitry 420 includes one or more of RF transceiver circuitry 422, baseband processing circuitry 424, and application processing circuitry 426. In other embodiments, the processing circuitry may comprise different components and/or different combinations of components. In certain embodiments processing circuitry 420 of WD 410 may comprise a SOC. In some embodiments, RF transceiver circuitry 422, baseband processing circuitry 424, and application processing circuitry 426 may be on separate chips or sets of chips. In alternative embodiments, part or all of baseband processing circuitry 424 and application processing circuitry 426 may be combined into one chip or set of chips, and RF transceiver circuitry 422 may be on a separate chip or set of chips. In still alternative embodiments, part or all of RF transceiver circuitry 422 and baseband processing circuitry 424 may be on the same chip or set of chips, and application processing circuitry 426 may be on a separate chip or set of chips. In yet other alternative embodiments, part or all of RF transceiver circuitry 422, baseband processing circuitry 424, and application processing circuitry 426 may be combined in the same chip or set of chips. In some embodiments, RF transceiver circuitry 422 may be a part of interface 414. RF transceiver circuitry 422 may condition RF signals for processing circuitry 420.

In certain embodiments, some or all of the functionalities described herein as being performed by a WD may be provided by processing circuitry 420 executing instructions stored on device readable medium 430, which in certain embodiments may be a computer-readable storage medium. In alternative embodiments, some or all of the functionality may be provided by processing circuitry 420 without executing instructions stored on a separate or discrete device readable storage medium, such as in a hard-wired manner. In any of those particular embodiments, whether executing instructions stored on a device readable storage medium or not, processing circuitry 420 can be configured to perform the described functionality. The benefits provided by such functionality are not limited to processing circuitry 420 alone or to other components of WD 410, but are enjoyed by WD 410 as a whole, and/or by end users and the wireless network generally.

Processing circuitry 420 may be configured to perform any determining, calculating, or similar operations (e.g., certain obtaining operations) described herein as being performed by a WD. These operations, as performed by processing circuitry 420, may include processing information obtained by processing circuitry 420 by, for example, converting the obtained information into other information, comparing the obtained information or converted information to information stored by WD 410, and/or performing one or more operations based on the obtained information or converted information, and as a result of said processing making a determination.

Device readable medium 430 may be operable to store a computer program, software, an application including one or more of logic, rules, code, tables, etc. and/or other instructions capable of being executed by processing circuitry 420. Device readable medium 430 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 420. In some embodiments, processing circuitry 420 and device readable medium 430 may be considered to be integrated.

User interface equipment 432 may provide components that allow for a human user to interact with WD 410. Such interaction may be of many forms, such as visual, audial, tactile, etc. User interface equipment 432 may be operable to produce output to the user and to allow the user to provide input to WD 410. The type of interaction may vary depending on the type of user interface equipment 432 installed in WD 410. For example, if WD 410 is a smart phone, the interaction may be via a touch screen; if WD 410 is a smart meter, the interaction may be through a screen that provides usage (e.g., the number of gallons used) or a speaker that provides an audible alert (e.g., if smoke is detected). User interface equipment 432 may include input interfaces, devices and circuits, and output interfaces, devices and circuits. User interface equipment 432 is configured to allow input of information into WD 410 and is connected to processing circuitry 420 to allow processing circuitry 420 to process the input information. User interface equipment 432 may include, for example, a microphone, a proximity or other sensor, keys/buttons, a touch display, one or more cameras, a USB port, or other input circuitry. User interface equipment 432 is also configured to allow output of information from WD 410, and to allow processing circuitry 420 to output information from WD 410. User interface equipment 432 may include, for example, a speaker, a display, vibrating circuitry, a USB port, a headphone interface, or other output circuitry. Using one or more input and output interfaces, devices, and circuits, of user interface equipment 432, WD 410 may communicate with end users and/or the wireless network and allow them to benefit from the functionality described herein.

Auxiliary equipment 434 is operable to provide more specific functionality which may not be generally performed by WDs. This may comprise specialized sensors for doing measurements for various purposes, interfaces for additional types of communication such as wired communications etc. The inclusion and type of components of auxiliary equipment 434 may vary depending on the embodiment and/or scenario.

Power source 436 may, in some embodiments, be in the form of a battery or battery pack. Other types of power sources, such as an external power source (e.g., an electricity outlet), photovoltaic devices or power cells, may also be used. WD 410 may further comprise power circuitry 437 for delivering power from power source 436 to the various parts of WD 410 which need power from power source 436 to carry out any functionality described or indicated herein. Power circuitry 437 may in certain embodiments comprise power management circuitry. Power circuitry 437 may additionally or alternatively be operable to receive power from an external power source; in which case WD 410 may be connectable to the external power source (such as an electricity outlet) via input circuitry or an interface such as an electrical power cable. Power circuitry 437 may also in certain embodiments be operable to deliver power from an external power source to power source 436. This may be, for example, for the charging of power source 436. Power circuitry 437 may perform any formatting, converting, or other modification to the power from power source 436 to make the power suitable for the respective components of WD 410 to which power is supplied.

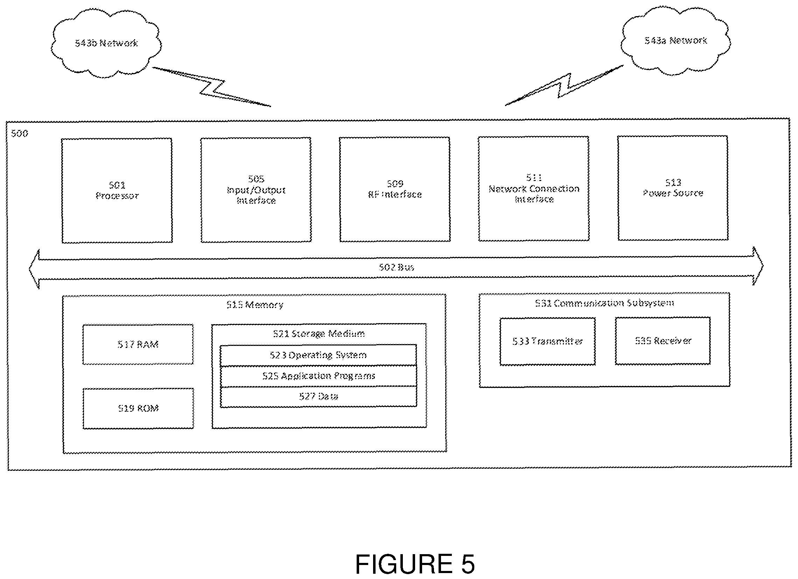

FIGURE 5 illustrates one embodiment of a UE, in accordance with certain embodiments. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 400 may be any UE identified by the 3rd Generation Partnership Project (3GPP), including a NB-IoT UE, a MTC UE, and/or an enhanced MTC (eMTC) UE. UE 500, as illustrated in FIGURE 5, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although FIGURE 5 is a UE, the components discussed herein are equally applicable to a WD, and vice-versa.

In FIGURE 5, UE 500 includes processing circuitry 501 that is operatively coupled to input/output interface 505, radio frequency (RF) interface 509, network connection interface 511, memory 515 including random access memory (RAM) 517, read-only memory (ROM) 519, and storage medium 521 or the like, communication subsystem 531, power source 533, and/or any other component, or any combination thereof. Storage medium 521 includes operating system 523, application program 525, and data 527. In other embodiments, storage medium 521 may include other similar types of information. Certain UEs may utilize all of the components shown in FIGURE 5, or only a subset of the components. The level of integration between the components may vary from one UE to another UE. Further, certain UEs may contain multiple instances of a component, such as multiple processors, memories, transceivers, transmitters, receivers, etc. In particular embodiment, the UE 500 may be the UE described in FIGURE 3.

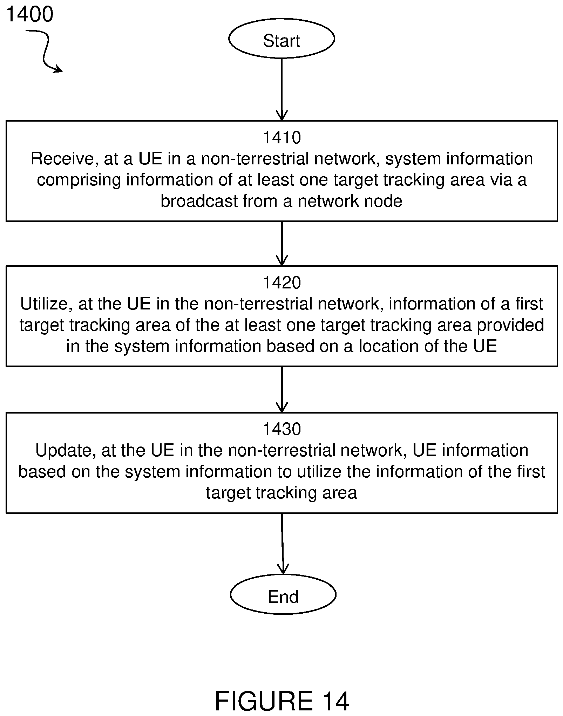

In FIGURE 5, processing circuitry 501 may be configured to process computer instructions and data. Processing circuitry 501 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 501 may include two central processing units (CPUs). Data may be information in a form suitable for use by a computer. In certain embodiment, processing circuitry 501 may perform a method which is further illustrated in FIGURE 14.

In the depicted embodiment, input/output interface 505 may be configured to provide a communication interface to an input device, output device, or input and output device. UE 500 may be configured to use an output device via input/output interface 505. An output device may use the same type of interface port as an input device. For example, a USB port may be used to provide input to and output from UE 500. The output device may be a speaker, a sound card, a video card, a display, a monitor, a printer, an actuator, an emitter, a smartcard, another output device, or any combination thereof. UE 500 may be configured to use an input device via input/output interface 505 to allow a user to capture information into UE 500. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 5, RF interface 509 may be configured to provide a communication interface to RF components such as a transmitter, a receiver, and an antenna. Network connection interface 511 may be configured to provide a communication interface to network 543a. Network 543a may encompass wired and/or wireless networks such as a local-area network (LAN), a wide-area network (WAN), a computer network, a wireless network, a telecommunications network, another like network or any combination thereof. For example, network 543a may comprise a Wi-Fi network. Network connection interface 511 may be configured to include a receiver and a transmitter interface used to communicate with one or more other devices over a communication network according to one or more communication protocols, such as Ethernet, TCP/IP, SONET, ATM, or the like. Network connection interface 511 may implement receiver and transmitter functionality appropriate to the communication network links (e.g., optical, electrical, and the like). The transmitter and receiver functions may share circuit components, software or firmware, or alternatively may be implemented separately.

RAM 517 may be configured to interface via bus 502 to processing circuitry 501 to provide storage or caching of data or computer instructions during the execution of software programs such as the operating system, application programs, and device drivers. ROM 519 may be configured to provide computer instructions or data to processing circuitry 501. For example, ROM 519 may be configured to store invariant low-level system code or data for basic system functions such as basic input and output (I/O), startup, or reception of keystrokes from a keyboard that are stored in a non-volatile memory. Storage medium 521 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 521 may be configured to include operating system 523, application program 525 such as a web browser application, a widget or gadget engine or another application, and data file 527. Storage medium 521 may store, for use by UE 500, any of a variety of various operating systems or combinations of operating systems.

Storage medium 521 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 521 may allow UE 500 to access computer-executable instructions, application programs or the like, stored on transitory or non-transitory memory media, to off-load data, or to upload data. An article of manufacture, such as one utilizing a communication system may be tangibly embodied in storage medium 521, which may comprise a device readable medium.

In FIGURE 5, processing circuitry 501 may be configured to communicate with network 543b using communication subsystem 531. Network 543a and network 543b may be the same network or networks or different network or networks. Communication subsystem 531 may be configured to include one or more transceivers used to communicate with network 543b. For example, communication subsystem 531 may be configured to include one or more transceivers used to communicate with one or more remote transceivers of another device capable of wireless communication such as another WD, UE, or base station of a radio access network (RAN) according to one or more communication protocols, such as IEEE 802.5, CDMA, WCDMA, GSM, LTE, UTRAN, WiMax, or the like. Each transceiver may include transmitter 533 and/or receiver 535 to implement transmitter or receiver functionality, respectively, appropriate to the RAN links (e.g., frequency allocations and the like). Further, transmitter 533 and receiver 535 of each transceiver may share circuit components, software or firmware, or alternatively may be implemented separately.

In the illustrated embodiment, the communication functions of communication subsystem 531 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 531 may include cellular communication, Wi-Fi communication, Bluetooth communication, and GPS communication. Network 543b may encompass wired and/or wireless networks such as a local-area network (LAN), a wide-area network (WAN), a computer network, a wireless network, a telecommunications network, another like network or any combination thereof. For example, network 543b may be a cellular network, a Wi-Fi network, and/or a near-field network. Power source 513 may be configured to provide alternating current (AC) or direct current (DC) power to components of UE 500.

The features, benefits and/or functions described herein may be implemented in one of the components of UE 500 or partitioned across multiple components of UE 500. Further, the features, benefits, and/or functions described herein may be implemented in any combination of hardware, software or firmware. In one example, communication subsystem 531 may be configured to include any of the components described herein. Further, processing circuitry 501 may be configured to communicate with any of such components over bus 502. In another example, any of such components may be represented by program instructions stored in memory that when executed by processing circuitry 501 perform the corresponding functions described herein. In another example, the functionality of any of such components may be partitioned between processing circuitry 501 and communication subsystem 531. In another example, the non-computationally intensive functions of any of such components may be implemented in software or firmware and the computationally intensive functions may be implemented in hardware.

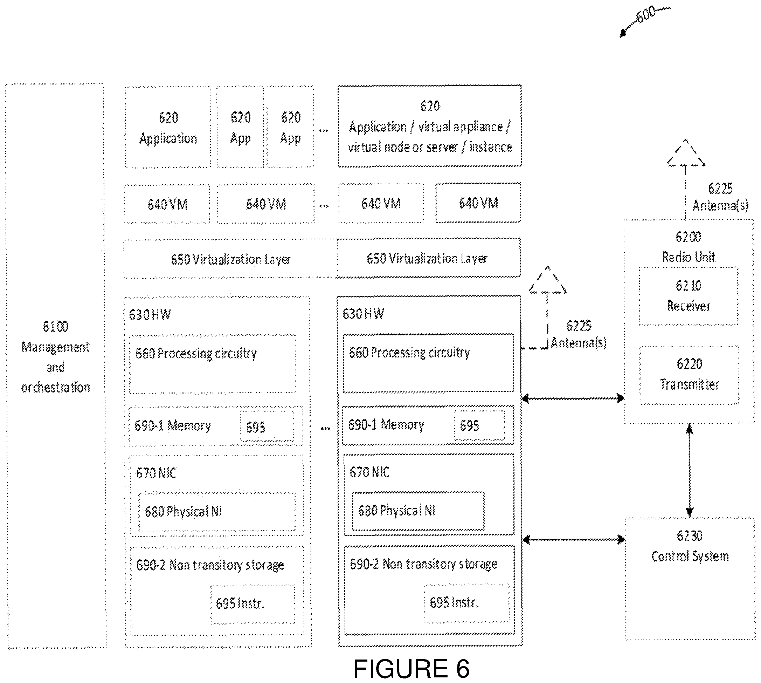

FIGURE 6 illustrates an example virtualization environment, in accordance with certain embodiments. FIGURE 6 is a schematic block diagram illustrating a virtualization environment 600 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 600 hosted by one or more of hardware nodes 630. Further, in embodiments in which the virtual node is not a radio access node or does not require radio connectivity (e.g., a core network node), then the network node may be entirely virtualized.

The functions may be implemented by one or more applications 620 (which may alternatively be called software instances, virtual appliances, network functions, virtual nodes, virtual network functions, etc.) operative to implement some of the features, functions, and/or benefits of some of the embodiments disclosed herein. Applications 620 are run in virtualization environment 600 which provides hardware 630 comprising processing circuitry 660 and memory 690. Memory 690 contains instructions 695 executable by processing circuitry 660 whereby application 620 is operative to provide one or more of the features, benefits, and/or functions disclosed herein.

Virtualization environment 600, comprises general-purpose or special-purpose network hardware devices 630 comprising a set of one or more processors or processing circuitry 660, which may be commercial off-the-shelf (COTS) processors, dedicated Application Specific Integrated Circuits (ASICs), or any other type of processing circuitry including digital or analog hardware components or special purpose processors. Each hardware device may comprise memory 690-1 which may be non-persistent memory for temporarily storing instructions 695 or software executed by processing circuitry 660. Each hardware device may comprise one or more network interface controllers (NICs) 670, also known as network interface cards, which include physical network interface 680. Each hardware device may also include non-transitory, persistent, machine-readable storage media 690-2 having stored therein software 695 and/or instructions executable by processing circuitry 660. Software 695 may include any type of software including software for instantiating one or more virtualization layers 650 (also referred to as hypervisors), software to execute virtual machines 640 as well as software allowing it to execute functions, features and/or benefits described in relation with some embodiments described herein.

Virtual machines 640, comprise virtual processing, virtual memory, virtual networking or interface and virtual storage, and may be run by a corresponding virtualization layer 650 or hypervisor. Different embodiments of the instance of virtual appliance 620 may be implemented on one or more of virtual machines 640, and the implementations may be made in different ways.

During operation, processing circuitry 660 executes software 695 to instantiate the hypervisor or virtualization layer 650, which may sometimes be referred to as a virtual machine monitor (VMM). Virtualization layer 650 may present a virtual operating platform that appears like networking hardware to virtual machine 640.

As shown in FIGURE 6, hardware 630 may be a standalone network node with generic or specific components. Hardware 630 may comprise antenna 6225 and may implement some functions via virtualization. Alternatively, hardware 630 may be part of a larger cluster of hardware (e.g. such as in a data center or customer premise equipment (CPE)) where many hardware nodes work together and are managed via management and orchestration (MANO) 6100, which, among others, oversees lifecycle management of applications 620.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, virtual machine 640 may be a software implementation of a physical machine that runs programs as if they were executing on a physical, non-virtualized machine. Each of virtual machines 640, and that part of hardware 630 that executes that virtual machine, be it hardware dedicated to that virtual machine and/or hardware shared by that virtual machine with others of the virtual machines 640, forms a separate virtual network elements (VNE).

Still in the context of NFV, Virtual Network Function (VNF) is responsible for handling specific network functions that run in one or more virtual machines 640 on top of hardware networking infrastructure 630 and corresponds to application 620 in FIGURE 6.

In some embodiments, one or more radio units 6200 that each include one or more transmitters 6220 and one or more receivers 6210 may be coupled to one or more antennas 6225. Radio units 6200 may communicate directly with hardware nodes 630 via one or more appropriate network interfaces and may be used in combination with the virtual components to provide a virtual node with radio capabilities, such as a radio access node or a base station.

In some embodiments, some signaling can be affected with the use of control system 6230 which may alternatively be used for communication between the hardware nodes 630 and radio units 6200.

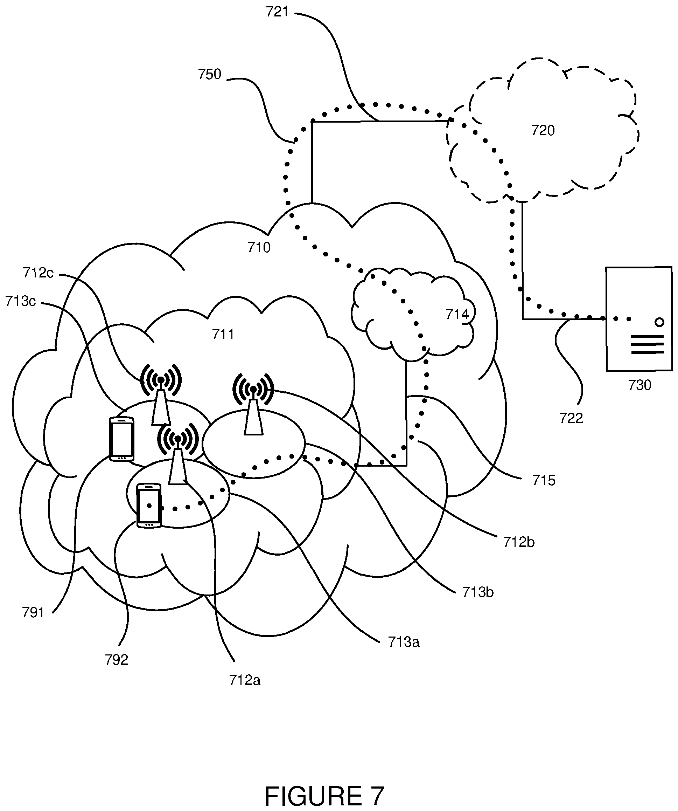

FIGURE 7 illustrates an example telecommunication network connected via an intermediate network to a host computer, in accordance with certain embodiments. With reference to FIGURE 7, in accordance with an embodiment, a communication system includes telecommunication network 710, such as a 3GPP-type cellular network, which comprises access network 711, such as a radio access network, and core network 714. Access network 711 comprises a plurality of base stations 712a, 712b, 712c, such as NBs, eNBs, gNBs or other types of wireless access points, each defining a corresponding coverage area 713a, 713b, 713c. Each base station 712a, 712b, 712c is connectable to core network 714 over a wired or wireless connection 715. A first UE 791 located in coverage area 713c is configured to wirelessly connect to, or be paged by, the corresponding base station 712c. A second UE 792 in coverage area 713a is wirelessly connectable to the corresponding base station 712a. While a plurality of UEs 791, 792 are illustrated in this example, the disclosed embodiments are equally applicable to a situation where a sole UE is in the coverage area or where a sole UE is connecting to the corresponding base station 712.

Telecommunication network 710 is itself connected to host computer 730, which may be embodied in the hardware and/or software of a standalone server, a cloud-implemented server, a distributed server or as processing resources in a server farm. Host computer 730 may be under the ownership or control of a service provider or may be operated by the service provider or on behalf of the service provider. Connections 721 and 722 between telecommunication network 710 and host computer 730 may extend directly from core network 714 to host computer 730 or may go via an optional intermediate network 720. Intermediate network 720 may be one of, or a combination of more than one of, a public, private or hosted network; intermediate network 720, if any, may be a backbone network or the Internet; in particular, intermediate network 720 may comprise two or more sub-networks (not shown).

The communication system of FIGURE 7 as a whole enables connectivity between the connected UEs 791, 792 and host computer 730. The connectivity may be described as an over-the-top (OTT) connection 750. Host computer 730 and the connected UEs 791, 792 are configured to communicate data and/or signaling via OTT connection 750, using access network 711, core network 714, any intermediate network 720 and possible further infrastructure (not shown) as intermediaries. OTT connection 750 may be transparent in the sense that the participating communication devices through which OTT connection 750 passes are unaware of routing of uplink and downlink communications. For example, base station 712 may not or need not be informed about the past routing of an incoming downlink communication with data originating from host computer 730 to be forwarded (e.g., handed over) to a connected UE 791. Similarly, base station 712 need not be aware of the future routing of an outgoing uplink communication originating from the UE 791 towards the host computer 730.

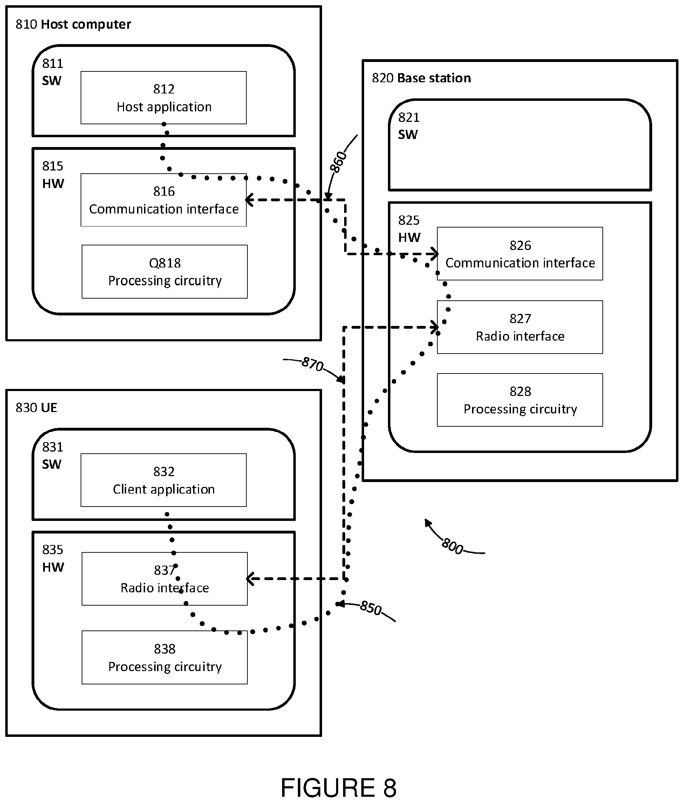

FIGURE 8 illustrates an example host computer communicating via a base station with a user equipment over a partially wireless connection, in accordance with certain embodiments. Example implementations, in accordance with an embodiment, of the UE, base station and host computer discussed in the preceding paragraphs will now be described with reference to FIGURE 8. In communication system 800, host computer 810 comprises hardware 815 including communication interface 816 configured to set up and maintain a wired or wireless connection with an interface of a different communication device of communication system 800. Host computer 810 further comprises processing circuitry 818, which may have storage and/or processing capabilities. In particular, processing circuitry 818 may comprise one or more programmable processors, application-specific integrated circuits, field programmable gate arrays or combinations of these (not shown) adapted to execute instructions. Host computer 810 further comprises software 811, which is stored in or accessible by host computer 810 and executable by processing circuitry 818. Software 811 includes host application 812. Host application 812 may be operable to provide a service to a remote user, such as UE 830 connecting via OTT connection 850 terminating at UE 830 and host computer 810. In providing the service to the remote user, host application 812 may provide user data which is transmitted using OTT connection 850.

Communication system 800 further includes base station 820 provided in a telecommunication system and comprising hardware 825 enabling it to communicate with host computer 810 and with UE 830. Hardware 825 may include communication interface 826 for setting up and maintaining a wired or wireless connection with an interface of a different communication device of communication system 800, as well as radio interface 827 for setting up and maintaining at least wireless connection 870 with UE 830 located in a coverage area (not shown in FIGURE 8) served by base station 820. Communication interface 826 may be configured to facilitate connection 860 to host computer 810. Connection 860 may be direct, or it may pass through a core network (not shown in FIGURE 8) of the telecommunication system and/or through one or more intermediate networks outside the telecommunication system. In the embodiment shown, hardware 825 of base station 820 further includes processing circuitry 828, which may comprise one or more programmable processors, application-specific integrated circuits, field programmable gate arrays or combinations of these (not shown) adapted to execute instructions. Base station 820 further has software 821 stored internally or accessible via an external connection.

Communication system 800 further includes UE 830 already referred to. Its hardware 835 may include radio interface 837 configured to set up and maintain wireless connection 870 with a base station serving a coverage area in which UE 830 is currently located. Hardware 835 of UE 830 further includes processing circuitry 838, which may comprise one or more programmable processors, application-specific integrated circuits, field programmable gate arrays or combinations of these (not shown) adapted to execute instructions. UE 830 further comprises software 831, which is stored in or accessible by UE 830 and executable by processing circuitry 838. Software 831 includes client application 832. Client application 832 may be operable to provide a service to a human or non-human user via UE 830, with the support of host computer 810. In host computer 810, an executing host application 812 may communicate with the executing client application 832 via OTT connection 850 terminating at UE 830 and host computer 810. In providing the service to the user, client application 832 may receive request data from host application 812 and provide user data in response to the request data. OTT connection 850 may transfer both the request data and the user data. Client application 832 may interact with the user to generate the user data that it provides.

It is noted that host computer 810, base station 820 and UE 830 illustrated in FIGURE 8 may be similar or identical to host computer 730, one of base stations 712a, 712b, 712c and one of UEs 791, 792 of FIGURE 7, respectively. This is to say, the inner workings of these entities may be as shown in FIGURE 8 and independently, the surrounding network topology may be that of FIGURE 7.

In FIGURE 8, OTT connection 850 has been drawn abstractly to illustrate the communication between host computer 810 and UE 830 via base station 820, without explicit reference to any intermediary devices and the precise routing of messages via these devices. Network infrastructure may determine the routing, which it may be configured to hide from UE 830 or from the service provider operating host computer 810, or both. While OTT connection 850 is active, the network infrastructure may further take decisions by which it dynamically changes the routing (e.g., on the basis of load balancing consideration or reconfiguration of the network).

Wireless connection 870 between UE 830 and base station 820 is in accordance with the teachings of the embodiments described throughout this disclosure. One or more of the various embodiments improve the performance of OTT services provided to UE 830 using OTT connection 850, in which wireless connection 870 forms the last segment. More precisely, the teachings of these embodiments may improve the handling of redundant data in the transmit buffer and thereby provide benefits such as improved efficiency in radio resource use (e.g., not transmitting redundant data) as well as reduced delay in receiving new data (e.g., by removing redundant data in the buffer, new data can be transmitted sooner).

A measurement procedure may be provided for the purpose of monitoring data rate, latency and other factors on which the one or more embodiments improve. There may further be an optional network functionality for reconfiguring OTT connection 850 between host computer 810 and UE 830, in response to variations in the measurement results. The measurement procedure and/or the network functionality for reconfiguring OTT connection 850 may be implemented in software 811 and hardware 815 of host computer 810 or in software 831 and hardware 835 of UE 830, or both. In embodiments, sensors (not shown) may be deployed in or in association with communication devices through which OTT connection 850 passes; the sensors may participate in the measurement procedure by supplying values of the monitored quantities exemplified above or supplying values of other physical quantities from which software 811, 831 may compute or estimate the monitored quantities. The reconfiguring of OTT connection 850 may include message format, retransmission settings, preferred routing etc.; the reconfiguring need not affect base station 820, and it may be unknown or imperceptible to base station 820. Such procedures and functionalities may be known and practiced in the art. In certain embodiments, measurements may involve proprietary UE signaling facilitating host computer 810's measurements of throughput, propagation times, latency and the like. The measurements may be implemented in that software 811 and 831 causes messages to be transmitted, in particular empty or 'dummy' messages, using OTT connection 850 while it monitors propagation times, errors etc.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

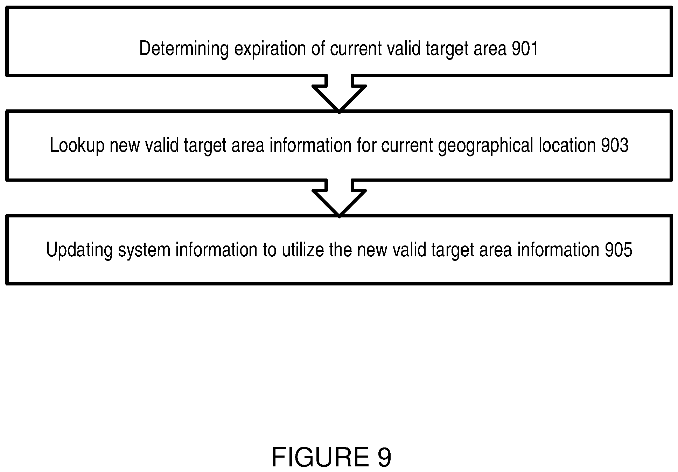

FIGURE 9 illustrates an example method performed at a UE, in accordance with certain embodiments. The method begins at step 901 with a determination by a UE or wireless device of an expiration of current valid target area in the non-terrestrial network. The expiration can be based on a current time. The time where a satellite moves to cover a new target are can be known from ephemeris data and the base station either at the satellite or via the satellite can provide a list of mappings of target are information as discussed herein above. Using the target area information mapping the UE or wireless device looks up new valid target area information in the non-terrestrial network for current geographical location (Step 903). The current geographical location of the UE or wireless device can change since they are mobile. A change in target area information can be triggered by the movement of the UE or wireless device as well. The lookup of the mapping provides current target area information that can be used for updating system information to utilize the new valid target area information for connectivity with the non-terrestrial network (Step 905).

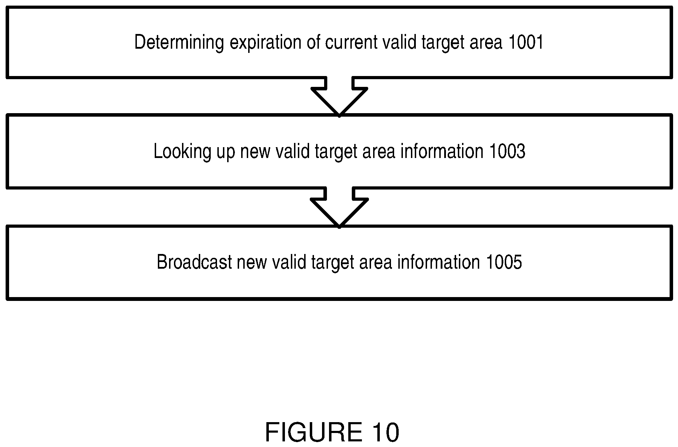

FIGURE 10 illustrates an example method performed at a base station, in accordance with some embodiments. The method begins at step 1001 with a determination by a base station in a satellite or connected to UEs via a satellite of an expiration of current valid target area in the non-terrestrial network. The expiration can be based on a current time. The time where a satellite moves to cover a new target are can be known from ephemeris data and the base station either at the satellite or via the satellite can provide a list of mappings of target are information as discussed herein above. Using the target area information mapping the UE or wireless device looks up new valid target area information in the non-terrestrial network (Step 1003). The lookup of the mapping provides current target area information that can be used for updating system information to utilize the new valid target area information for connectivity with the non-terrestrial network. The base station causes this new valid target area information to be broadcast to UEs or wireless devices in the target area, which can then utilize this information for connectivity with the NTN (Step 1005).

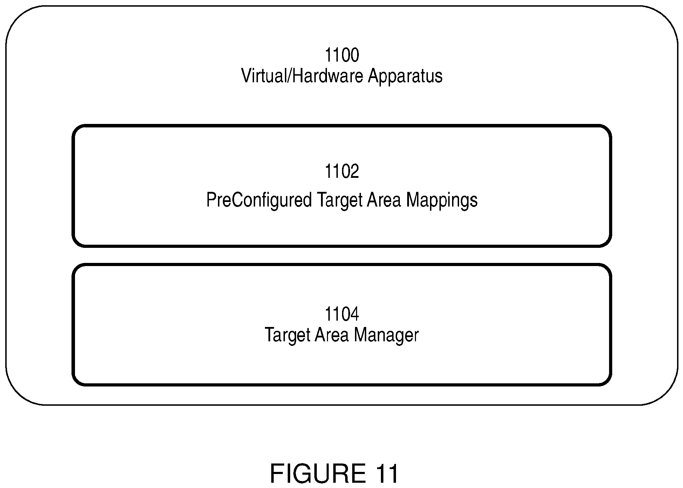

FIGURE 11 illustrates a schematic block diagram of an exemplary apparatus, in accordance with certain embodiments. The apparatus 1100 may be, for example, the wireless network shown in FIGURE 4. The apparatus 1100 may be implemented in a wireless device or network node (e.g., wireless device 410 or network node 460 shown in FIGURE 4). The apparatus 1100 is operable to carry out the example method described with reference to FIGURES 9 and 10 and possibly any other processes or methods disclosed herein. It is also to be understood that the methods of FIGURES 9 and 10 are not necessarily carried out solely by the apparatus 1100. At least some operations of the method can be performed by one or more other entities.

The apparatus 1100 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause a target area manager 1104, to utilize a preconfigured target area mapping 1102, to manage target area updates, and any other suitable units of the apparatus 1100 to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

FIGURE 12 illustrates a flow diagram of an example method, in accordance with certain embodiments. The method 1200 may be performed by a network node. The network node may be the network node 460 depicted in FIGURE 4. The method 1200 begins at step 1210 with determining, at a network node, that a current tracking area in a non-terrestrial network for the network node is expiring. In particular embodiments, the network node may be a gNB implemented in the satellite and communicates with a ground node via a feeder link. In particular embodiments, the network node may be a gNB implemented in a ground node and communicates with a satellite via a feeder link.

At step 1220, the method 1200 determines, at the network node, at least one target tracking area in the non-terrestrial network based on a preconfigured mapping. In particular embodiments, the preconfigured mapping comprises at least one target tracking area code corresponding to a cell identity of a target network node within a period of time. In particular embodiments, the preconfigured mapping may be determined based on ephemeris data of a satellite. In particular embodiments, the target network node may be preconfigured based on the preconfigured mapping.

At step 1230, the method 1200 broadcasts, to at least one UE in the at least one target tracking area, system information comprising information of the at least one target tracking area.

In particular embodiments, the method 1200 further comprises determining an additional mapping of an additional target network node and an additional period of time for an additional tracking area when the feeder link is changed, and signaling information of the additional mapping to the additional target network node for establishing a next feeder link between the network node and the additional target network node.

FIGURE 13 illustrates a flow diagram of an example method, in accordance with certain embodiments. The method 1300 may be performed by a network node. The network node may be the network node 460 depicted in FIGURE 4. The method 1300 begins at step 1310 with determining, at a network node, that a current tracking area in a non-terrestrial network for the network node is expiring. In particular embodiments, the network node may be a gNB implemented in the satellite and communicates with a ground node via a feeder link. In particular embodiments, the network node may be a gNB implemented in a ground node and communicates with a satellite via a feeder link.

At step 1320, the method 1300 determines, at the network node, a list of at least one target tracking area in the non-terrestrial network based on a movement of a satellite. In particular embodiments, the list of the at least one target tracking area may be updated by adding a new tracking area and removing an old tracking area based on the movement of the satellite. In particular embodiments, the list of the at least one target tracking area may be updated based on ephemeris data of a satellite.

At step 1330, the method 1300 broadcasts, to at least one UE in the at least one target tracking area, system information comprising information of the at least one target tracking area.

In particular embodiments, the method 1300 further comprises determining an additional mapping of an additional target network node and an additional period of time for an additional tracking area when the feeder link is changed, and signaling information of the additional mapping to the additional target network node for establishing a next feeder link between the network node and the additional target network node.

FIGURE 14 illustrates a flow diagram of an example method, in accordance with certain embodiments. The method 1400 may be performed by a UE or a wireless device. The UE may be the wireless device depicted in FIGURE 4 or the user equipment shown in FIGURE 5. The method 1400 begins at step 1410 with receiving, at a UE in a non-terrestrial network, system information comprising information of at least one target tracking area via a broadcast from a network node. In particular embodiments, the information of the at least one target tracking area is determined based on ephemeris data of a satellite.

At step 1420, the method 1400 utilizes, at the UE in the non-terrestrial network, information of a first target tracking area of the at least one target tracking area provided in the system information based on a location of the UE. In particular embodiments, the first target tracking area of the at least one target tracking area may be the latest target tracking area of the at least one target tracking area updated by the network node. In particular embodiments, the information of the at least one target tracking area comprises at least one target tracking area code corresponding to a cell identity of a target network node within a period of time.

At step 1430, the method 1400 updates, at the UE in the non-terrestrial network, UE information based on the system information to utilize the information of the first target tracking area.

FIGURE 15 illustrates a schematic block diagram of an exemplary network node 1500 in a wireless network, in accordance with certain embodiments. In particular embodiments, the wireless network may be the wireless network 406 shown in FIGURE 4. The network node 1500 may be the network node 460 shown in FIGURE 4. The network node 1500 is operable to carry out the example methods described with reference to FIGURES 12 and 13 and possibly any other processes or methods disclosed herein. It is also to be understood that the methods in FIGURES 12 and 13 are not necessarily carried out solely by the network node 1400. At least some operations of the method can be performed by one or more other entities.

The network node 1500 may comprise processing circuitry, which may include one or more microprocessor or microcontrollers, as well as other digital hardware, which may include digital signal processors (DSPs), special-purpose digital logic, and the like. In some embodiments, the processing circuitry of the network node 1400 may be the processing circuitry 470 shown in FIGURE 4. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause a determining unit 1510, a broadcasting unit 1520, and any other suitable units of the network node 1500 to perform corresponding functions according one or more embodiments of the present disclosure, such as a processor, a receiver, and a transmitter.

As illustrated in FIGURE 15, the network node 1500 includes the determining unit 1510, and the broadcasting unit 1520. The determining unit 1510 may be configured to determine that a current tracking area in a non-terrestrial network for the network node is expiring. In particular embodiments, the network node may be a gNB implemented in the satellite and communicates with a ground node via a feeder link. In particular embodiments, the network node may be a gNB implemented in a ground node and communicates with a satellite via a feeder link.

Furthermore, the determining unit 1510 may be further configured to determine at least one target tracking area in the non-terrestrial network based on a preconfigured mapping. In particular embodiments, the preconfigured mapping comprises at least one target tracking area code corresponding to a cell identity of a target network node within a period of time. In particular embodiments, the preconfigured mapping may be determined based on ephemeris data of a satellite. In particular embodiments, the target network node may be preconfigured based on the preconfigured mapping.

In another circumstance, the determining unit 1510 may be further configured to determine a list of at least one target tracking area in the non-terrestrial network based on a movement of a satellite. In particular embodiments, the list of the at least one target tracking area may be updated by adding a new tracking area and removing an old tracking area based on the movement of the satellite. In particular embodiments, the list of the at least one target tracking area may be updated based on ephemeris data of a satellite.

The broadcasting unit 1520 may be configured to broadcast, to at least one UE in the at least one target tracking area, system information comprising information of the at least one target tracking area.

In particular embodiments, the network node 1500 may be further configured to determine an additional mapping of an additional target network node and an additional period of time for an additional tracking area when the feeder link is changed, and signaling information of the additional mapping to the additional target network node for establishing a next feeder link between the network node and the additional target network node.

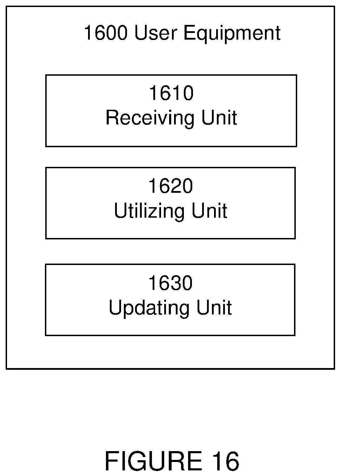

FIGURE 16 illustrates a schematic block diagram of an exemplary UE 1600, in accordance with certain embodiments. The UE 1600 may be used in a wireless network, e.g. the wireless network 406 shown in FIGURE 4. In particular embodiments, the UE 1600 may be implemented in a wireless device 410 shown in FIGURE 4. In particular embodiments, the UE 1600 may be the UE 500 shown in FIGURE 5. The UE 1600 is operable to carry out the example method described with reference to FIGURE 14 and possibly any other processes or methods disclosed herein. It is also to be understood that the method in FIGURE 14 is not necessarily carried out solely by user equipment 1600. At least some operations of the method can be performed by one or more other entities.

The UE 1600 may comprise processing circuitry, which may include one or more microprocessor or microcontrollers, as well as other digital hardware, which may include digital signal processors (DSPs), special-purpose digital logic, and the like. In some embodiments, the processing circuitry of UE 1600 may be the processing circuitry 420 shown in FIGURE 4. In some embodiments, the processing circuitry of UE 1600 may be the processor 501 shown in FIGURE 5. The processing circuitry may be configured to execute program code stored in memory 515 shown in FIGURE 5, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause a receiving unit 1610, an utilizing unit 1620, and an updating unit 1630, and any other suitable units of UE 1600 to perform corresponding functions according one or more embodiments of the present disclosure, such as a transmitter, a processor, and a receiver.

As illustrated in FIGURE 16, the UE 1600 includes the receiving unit 1610, the utilizing unit 1620, and the updating unit 1630. The receiving unit 1610 may be configured to receive system information comprising information of at least one target tracking area via a broadcast from a network node. In particular embodiments, the information of the at least one target tracking area is determined based on ephemeris data of a satellite.

The utilizing unit 1620 may be configured to utilize information of a first target tracking area of the at least one target tracking area provided in the system information based on a location of the UE. In particular embodiments, the first target tracking area of the at least one target tracking area may be the latest target tracking area of the at least one target tracking area updated by the network node. In particular embodiments, the information of the at least one target tracking area comprises at least one target tracking area code corresponding to a cell identity of a target network node within a period of time.

The updating unit 1630 may be configured to update UE information based on the system information to utilize the information of the first target tracking area.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, receivers, transmitters, memories, logic solid state and/or discrete devices, computer programs or instructions for carrying out respective tasks, procedures, computations, outputs, and/or displaying functions, and so on, as such as those that are described herein.

According to various embodiments, an advantage of features herein is reducing tracking area updates from the UEs over the link with the satellite. The methods disclosed in the present application provide preconfigured network nodes/base stations which are preconfigured to map the tracking area corresponding to a cell identity of a base station within a certain period of time. In addition, a new tracking area can also be determined based on a movement/orbit of the satellite. A list of potential tracking areas can be provided by adding a new tracking area when the satellite moves into this area and removing the oldest tracking area when the satellite is about to leave this area, so that the UE may utilize information of the most updated tracking area for satellite communication without excessive signaling.

While processes in the figures may show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, can be practiced with modification and alteration within the scope of the appended claims. The description is thus to be regarded as illustrative instead of limiting.

## Claims

1. A method (1200) for updating a tracking area in a non-terrestrial network, comprising:
determining, at a network node (460), that a current tracking area in a non-terrestrial network for the network node is expiring (1210);
determining, at the network node (460), at least one target tracking area in the non-terrestrial network based on a preconfigured mapping (1220), wherein the preconfigured mapping comprises at least one target tracking area code corresponding to a cell identity of a target network node within a period of time; and
broadcasting, to at least one user equipment, UE, (500) in the at least one target tracking area, system information comprising information of the at least one target tracking area (1230).

2. The method (1200) according to Claim 1, wherein the network node is a gNB implemented in a satellite and communicates with a ground node via a feeder link.

3. The method (1200) according to Claim 1, wherein the network node is a gNB implemented in a ground node and communicates with a satellite via a feeder link.

4. The method (1200) according to any one of Claims 1 to 3, wherein the target network node is preconfigured based on the preconfigured mapping.

5. The method (1200) according to Claim 1, wherein the preconfigured mapping is determined based on ephemeris data of a satellite.

6. The method (1200) according to Claim 2 or 3, further comprising:
determining an additional mapping of an additional target network node and an additional period of time for an additional tracking area when the feeder link is changed; and
signaling information of the additional mapping to the additional target network node for establishing a next feeder link between the network node and the additional target network node.

7. A method (1400) for updating a tracking area in a non-terrestrial network, comprising:
receiving, at a user equipment, UE, (500) in a non-terrestrial network, system information comprising information of at least one target tracking area via a broadcast from a network node (460) (1410), wherein the information of the at least one target tracking area comprises at least one target tracking area code corresponding to a cell identity of a target network node within a period of time; and
utilizing, at the UE (500) in the non-terrestrial network, information of a first target tracking area of the at least one target tracking area provided in the system information based on a location of the UE (500) (1420).

8. The method (1400) according to Claim 7, further comprising:
updating, at the UE (500) in the non-terrestrial network, UE information based on the system information to utilize the information of the first target tracking area.

9. The method (1400) according to Claim 7 or 8, wherein the information of the at least one target tracking area is determined based on ephemeris data of a satellite.

10. The method (1400) according to any one of Claims 7 to 9, wherein the first target tracking area of the at least one target tracking area is the latest target tracking area of the at least one target tracking area updated by the network node.

11. A network node (460) for updating a tracking area in a non-terrestrial network, comprising:
at least one processing circuitry (470); and
at least one storage that stores processor-executable instructions, when executed by the processing circuitry (470), causes a network node (460) to:
determine that a current tracking area in a non-terrestrial network for the network node is expiring (1210);
determine at least one target tracking area in the non-terrestrial network based on a preconfigured mapping (1220), wherein the preconfigured mapping comprises at least one target tracking area code corresponding to a cell identity of a target network node within a period of time; and
broadcast, to at least one user equipment, UE, (500) in the at least one target tracking area, system information comprising information of the at least one target tracking area (1230).

12. The network node (460) according to Claim 11, wherein the instructions further cause the network node (460) to perform the method according to any one of Claims 2 to 6.

13. A user equipment (500) for updating a tracking area in a non-terrestrial network, comprising:
at least one processing circuitry (501); and
at least one storage (515) that stores processor-executable instructions, when executed by the processing circuitry (501), causes a user equipment, UE, (500) to:
receive system information comprising information of at least one target tracking area via a broadcast from a network node (460) (1410), wherein the information of the at least one target tracking area comprises at least one target tracking area code corresponding to a cell identity of a target network node within a period of time; and utilize information of a first target tracking area of the at least one target tracking area provided in the system information based on a location of the UE (500) (1420).

14. The user equipment (500) according to Claim 13, wherein the instructions further cause the user equipment (500) to perform the method according to any one of Claims 8 to 10.

## Patentansprüche

1. Verfahren (1200) zur Aktualisierung eines Verfolgungsbereichs in einem nicht terrestrischen Netzwerk, umfassend:
Bestimmen an einem Netzwerkknoten (460), dass ein aktueller Verfolgungsbereich in einem nicht terrestrischen Netzwerk für den Netzwerkknoten abläuft (1210);
Bestimmen mindestens eines Zielverfolgungsbereichs im nicht terrestrischen Netzwerk am Netzwerkknoten (460) basierend auf einer vorkonfigurierten Zuordnung (1220), wobei die vorkonfigurierte Zuordnung mindestens einen Zielverfolgungsbereichscode umfasst, der einer Zellenidentität einer Zielnetzwerkknotens innerhalb eines Zeitraums entspricht; und
Senden von Systeminformationen, die Informationen des mindestens einen Zielverfolgungsbereichs umfassen, per Broadcast an mindestens eine Benutzereinrichtung, UE, (500) in dem mindestens einen Zielverfolgungsbereich (1230).

2. Verfahren (1200) nach Anspruch 1, wobei der Netzwerkknoten ein gNB ist, der in einem Satelliten implementiert ist und über eine Speiseverbindung mit einem Bodenknoten kommuniziert.

3. Verfahren (1200) nach Anspruch 1, wobei der Netzwerkknoten ein gNB ist, der in einem Bodenknoten implementiert ist und über eine Speiseverbindung mit einem Satelliten kommuniziert.

4. Verfahren (1200) nach einem der Ansprüche 1 bis 3, wobei der Zielnetzwerkknoten basierend auf der vorkonfigurierten Zuordnung vorkonfiguriert wird.

5. Verfahren (1200) nach Anspruch 1, wobei die vorkonfigurierte Zuordnung basierend auf Ephemeriden-Daten eines Satelliten bestimmt wird.

6. Verfahren (1200) nach Anspruch 2 oder 3, ferner umfassend:
Bestimmen einer zusätzlichen Zuordnung eines zusätzlichen Zielnetzwerkknotens und eines zusätzlichen Zeitraums für einen zusätzlichen Verfolgungsbereich bei Änderung der Speiseverbindung; und
Signalisieren von Informationen der zusätzlichen Zuordnung an den zusätzlichen Netzwerkknoten zum Herstellen einer nächsten Speiseverbindung zwischen dem Netzwerkknoten und dem zusätzlichen Zielnetzwerkknoten.

7. Verfahren (1400) zur Aktualisierung eines Verfolgungsbereichs in einem nicht terrestrischen Netzwerk, umfassend:
Empfangen von Systeminformationen, die Informationen mindestens eines Zielverfolgungsbereichs umfassen, an einer Benutzereinrichtung, UE, (500) in einem nicht terrestrischen Netzwerk über einen Broadcast von einem Netzwerkknoten (460) (1410), wobei die Informationen des mindestens einen Zielverfolgungsbereichs mindestens einen Zielverfolgungsbereichscode umfassen, der einer Zellenidentität eines Zielnetzwerkknotens innerhalb eines Zeitraums entspricht; und
Verwenden von Informationen eines ersten Zielverfolgungsbereichs des mindestens einen Zielverfolgungsbereichs, die in den Systeminformationen bereitgestellt werden, an der UE (500) im nicht terrestrischen Netzwerk basierend auf einem Standort der UE (500) (1420).

8. Verfahren (1400) nach Anspruch 7, ferner umfassend:
Aktualisieren von UE-Informationen an der UE (500) im nicht terrestrischen Netzwerk basierend auf den Systeminformationen, um die Informationen des ersten Zielverfolgungsbereichs zu verwenden.

9. Verfahren (1400) nach Anspruch 7 oder 8, wobei die Informationen des mindestens einen Zielverfolgungsbereichs basierend auf Ephemeriden-Daten eines Satelliten bestimmt werden.

10. Verfahren (1400) nach einem der Ansprüche 7 bis 9, wobei der erste Zielverfolgungsbereich des mindestens einen Zielverfolgungsbereichs der letzte Zielverfolgungsbereich des mindestens einen Zielverfolgungsbereichs ist, der durch den Netzwerkknoten aktualisiert wird.

11. Netzwerkknoten (460) zum Aktualisieren eines Verfolgungsbereichs in einem nicht terrestrischen Netzwerk, umfassend:
mindestens eine Verarbeitungsschaltungsanordnung (470); und
mindestens einen Speicher, der prozessorausführbare Anweisungen speichert, die bei Ausführung durch die Verarbeitungsschaltungsanordnung (470) einen Netzwerkknoten (460) veranlassen zum:
Bestimmen, dass ein aktueller Verfolgungsbereich in einem nicht terrestrischen Netzwerk für den Netzwerkknoten abläuft (1210);
Bestimmen mindestens eines Zielverfolgungsbereichs im nicht terrestrischen Netzwerk basierend auf einer vorkonfigurierten Zuordnung (1220), wobei die vorkonfigurierte Zuordnung mindestens einen Zielverfolgungsbereichscode umfasst, der einer Zellenidentität einer Zielnetzwerkknotens innerhalb eines Zeitraums entspricht; und
Senden von Systeminformationen, die Informationen des mindestens einen Zielverfolgungsbereichs umfassen, per Broadcast an mindestens eine Benutzereinrichtung, UE, (500) in dem mindestens einen Zielverfolgungsbereich (1230).

12. Netzwerkknoten (460) nach Anspruch 11, wobei die Anweisungen den Netzwerkknoten (460) ferner zum Durchführen des Verfahrens nach einem der Ansprüche 2 bis 6 veranlassen.

13. Benutzereinrichtung (500) zum Aktualisieren eines Verfolgungsbereichs in einem nicht terrestrischen Netzwerk, umfassend:
mindestens eine Verarbeitungsschaltungsanordnung (501); und
mindestens einen Speicher (515), der prozessorausführbare Anweisungen speichert, die bei Ausführung durch die Verarbeitungsschaltungsanordnung (501) eine Benutzereinrichtung, UE, (500) veranlassen zum:
Empfangen von Systeminformationen, die Informationen mindestens eines Zielverfolgungsbereichs umfassen, über einen Broadcast von einem Netzwerkknoten (460) (1410), wobei die Informationen des mindestens einen Zielverfolgungsbereichs mindestens einen Zielverfolgungsbereichscode umfassen, der einer Zellenidentität eines Zielnetzwerkknotens innerhalb eines Zeitraums entspricht; und Verwenden von Informationen eines ersten Zielverfolgungsbereichs des mindestens einen Zielverfolgungsbereichs, die in den Systeminformationen bereitgestellt werden, basierend auf einem Standort der UE (500) (1420).

14. Benutzereinrichtung (500) nach Anspruch 13, wobei die Anweisungen die Benutzereinrichtung (500) ferner zum Durchführen des Verfahrens nach einem der Ansprüche 8 bis 10 veranlassen.

## Revendications

1. Procédé (1200) pour la mise à jour d'une zone de suivi dans un réseau non terrestre, comprenant :
la détermination, au niveau d'un noeud de réseau (460), qu'une zone de suivi courante dans un réseau non terrestre pour le noeud de réseau expire (1210) ;
la détermination, au niveau du noeud de réseau (460), d'au moins une zone de suivi cible dans le réseau non terrestre sur la base d'un mappage préconfiguré (1220), dans lequel le mappage préconfiguré comprend au moins un code de zone de suivi cible correspondant à une identité de cellule d'un noeud de réseau cible au cours d'une période de temps ; et
la diffusion, à au moins un équipement utilisateur, UE, (500) dans l'au moins une zone de suivi cible, d'informations système comprenant des informations de l'au moins une zone de suivi cible (1230).

2. Procédé (1200) selon la revendication 1, dans lequel le noeud de réseau est un gNB mis en oeuvre dans un satellite et communique avec un noeud au sol via une liaison de connexion.

3. Procédé (1200) selon la revendication 1, dans lequel le noeud de réseau est un gNB mis en oeuvre dans un noeud au sol et communique avec un satellite via une liaison de connexion.

4. Procédé (1200) selon l'une quelconque des revendications 1 à 3, dans lequel le noeud de réseau cible est préconfiguré sur la base du mappage préconfiguré.

5. Procédé (1200) selon la revendication 1, dans lequel le mappage préconfiguré est déterminé sur la base de données d'éphéméride d'un satellite.

6. Procédé (1200) selon la revendication 2 ou 3, comprenant en outre :
la détermination d'un mappage supplémentaire d'un noeud de réseau cible supplémentaire et d'une période de temps supplémentaire pour une zone de suivi supplémentaire lorsque la liaison de connexion est changée ; et
la signalisation d'informations du mappage supplémentaire au noeud de réseau cible supplémentaire pour établir une liaison de connexion suivante entre le noeud de réseau et le noeud de réseau cible supplémentaire.

7. Procédé (1400) pour la mise à jour d'une zone de suivi dans un réseau non terrestre, comprenant :
la réception, au niveau d'un équipement utilisateur, UE, (500) dans un réseau non terrestre, d'informations système comprenant des informations d'au moins une zone de suivi cible via une diffusion depuis un noeud de réseau (460) (1410), dans lequel les informations de l'au moins une zone de suivi cible comprennent au moins un code de zone de suivi cible correspondant à une identité de cellule d'un noeud de réseau cible au cours d'une période de temps ; et
l'utilisation, au niveau de l'UE (500) dans le réseau non terrestre, d'informations d'une première zone de suivi cible parmi l'au moins une zone de suivi cible fournies dans les informations système sur la base d'un emplacement de l'UE (500) (1420).

8. Procédé (1400) selon la revendication 7, comprenant en outre :
la mise à jour, au niveau de l'UE (500) dans le réseau non terrestre, d'informations d'UE sur la base des informations système pour utiliser les informations de la première zone de suivi cible.

9. Procédé (1400) selon la revendication 7 ou 8, dans lequel les informations de l'au moins une zone de suivi cible sont déterminées sur la base de données d'éphéméride d'un satellite.

10. Procédé (1400) selon l'une quelconque des revendications 7 à 9, dans lequel la première zone de suivi cible parmi l'au moins une zone de suivi cible est la zone de suivi cible la plus récente parmi l'au moins une zone de suivi cible mise à jour par le noeud de réseau.

11. Noeud de réseau (460) pour la mise à jour d'une zone de suivi dans un réseau non terrestre, comprenant :
au moins une circuiterie de traitement (470) ; et
au moins un stockage qui stocke des instructions exécutables par processeur qui, lorsqu'elles sont exécutées par la circuiterie de traitement (470), amènent un noeud de réseau (460) à :
déterminer qu'une zone de suivi courante dans un réseau non terrestre pour le noeud de réseau expire (1210) ;
déterminer au moins une zone de suivi cible dans le réseau non terrestre sur la base d'un mappage préconfiguré (1220), dans lequel le mappage préconfiguré comprend au moins un code de zone de suivi cible correspondant à une identité de cellule d'un noeud de réseau cible au cours d'une période de temps ; et
diffuser, à au moins un équipement utilisateur, UE, (500) dans l'au moins une zone de suivi cible, des informations système comprenant des informations de l'au moins une zone de suivi cible (1230) .

12. Noeud de réseau (460) selon la revendication 11, dans lequel les instructions amènent en outre le noeud de réseau (460) à réaliser le procédé selon l'une quelconque des revendications 2 à 6.

13. Equipement utilisateur (500) pour la mise à jour d'une zone de suivi dans un réseau non terrestre, comprenant :
au moins une circuiterie de traitement (501) ; et
au moins un stockage (515) qui stocke des instructions exécutables par processeur qui, lorsqu'elles sont exécutées par la circuiterie de traitement (501), amènent un équipement utilisateur, UE, (500) à :
recevoir des informations système comprenant des informations d'au moins une zone de suivi cible via une diffusion depuis un noeud de réseau (460) (1410), dans lequel les informations de l'au moins une zone de suivi cible comprennent au moins un code de zone de suivi cible correspondant à une identité de cellule d'un noeud de réseau cible au cours d'une période de temps ; et utiliser des informations d'une première zone de suivi cible parmi l'au moins une zone de suivi cible fournies dans les informations système sur la base d'un emplacement de l'UE (500) (1420).

14. Equipement utilisateur (500) selon la revendication 13, dans lequel les instructions amènent en outre l'équipement utilisateur (500) à réaliser le procédé selon l'une quelconque des revendications 8 à 10.
